# EUROPÄISCHE PATENTSCHRIFT

(11) **EP 1 778 757 B1**
(45) Veröffentlichungstag und Bekanntmachung des Hinweises auf die Patenterteilung: **21.11.2007**
(21) Anmeldenummer: 05769836.7
(22) Anmeldetag: 04.08.2005
(51) Int. Cl.: C08G 18/80, C08G 18/79, C08G 18/71, C09D 175/04, C08G 18/61

(54) **PARTIKEL MIT GESCHÜTZTEN ISOCYANATGRUPPEN**
PARTICLES WITH PROTECTED ISOCYANATE GROUPS
PARTICULES A GROUPES ISOCYANATE PROTEGES

(30) Priorität: 19.08.2004 DE 102004040264
(43) Veröffentlichungstag der Anmeldung: 02.05.2007
(73) Patentinhaber: Wacker Chemie AG, 81737 München (DE)
(72) Erfinder: BRIEHN, Christoph, 81369 München (DE); GOTTSCHALK-GAUDIG, Torsten, 84561 Mehring (DE); WEIDNER, Richard, 84489 Burghausen (DE); PFEIFFER, Jürgen, 84489 Burghausen (DE); STANJEK, Volker, 81477 München (DE)
(74) Vertreter: Fritz, Helmut
(86) Internationale Anmeldenummer: PCT/EP2005/008461
(87) Internationale Veröffentlichungsnummer: WO 2006/018144

(56) Entgegenhaltungen:
- EP-A- 0 872 500
- DE-A1- 10 247 359

## Beschreibung

Die Erfindung betrifft Partikel, die auf ihrer Oberfläche geschützte Isocyanatgruppen aufweisen, ein Verfahren zu deren Herstellung sowie Beschichtungsformulierungen, die diese Partikel enthalten.

Partikel - insbesondere Nanopartikel - enthaltende Beschichtungssysteme sind Stand der Technik. Entsprechende Beschichtungen sind beispielsweise in EP 1 249 470 A2 oder WO 03/16370 beschrieben. Die Partikel führen dabei zu einer Verbesserung der Eigenschaften der entsprechenden Beschichtungen, insbesondere hinsichtlich ihrer Kratzfestigkeit sowie ihrer Chemikalienbeständigkeit.

Ein häufig auftretendes Problem beim Einsatz der - in der Regel anorganischen - Partikel in organischen Beschichtungssystemen besteht in einer meist unzureichenden Verträglichkeit von Partikel und Lackmatrix. Dies kann dazu führen, daß sich die Teilchen nicht hinreichend gut in einer Lackmatrix dispergieren lassen. Zudem können sich selbst gut dispergierte Partikel bei längeren Stand- oder Lagerzeiten absetzen, wobei sich gegebenenfalls größere Aggregate bzw. Agglomerate ausbilden, die sich auch bei einer Redispergierung nicht mehr bzw. nur schlecht in die ursprünglichen Teilchen auftrennen lassen. Die Verarbeitung von solchen inhomogenen Systemen ist in jedem Falle äußerst schwierig, oftmals sogar unmöglich.

Günstig ist daher der Einsatz von Partikeln, die auf ihrer Oberfläche über organische Gruppen verfügen, die zu einer besseren Verträglichkeit mit der Lackmatrix führen. Auf diese Weise wird das anorganische Partikel durch eine organische Hülle "maskiert". Besonders günstige Lackeigenschaften können dabei erreicht werden, wenn die organischen Funktionen auf den Partikeloberflächen zudem auch noch gegenüber der Lackmatrix reaktive Gruppen besitzen, so daß sie unter den jeweiligen Härtungsbedingungen des entsprechenden Lackes mit der Matrix reagieren können. So gelingt es, die Partikel während der Lackhärtung chemisch in die Matrix einzubauen, was oftmals besonders gute mechanische Eigenschaften aber auch eine verbesserte Chemikalienbeständigkeit zur Folge haben kann. Ein derartiges System ist beispielsweise in EP 832 947 A beschrieben.

Des weiteren ist auch der Einsatz von Beschichtungen bekannt, die ein mit Nanopartikeln modifiziertes Bindemittel enthalten. Diese können hergestellt werden, indem man ein mit einer reaktiven Funktionalität ausgestattetes Partikel mit einem Bindemittel, das eine komplementäre Funktion trägt, umsetzt. D.h. hier wird der organofunktionelle Partikel nicht erst bei der Lackhärtung sondern bereits bei der Bindemittelherstellung chemisch in die Lackmatrix eingebaut. Derartige Systeme sind beispielsweise in EP 1 187 885 A oder WO 01/05897 beschrieben.

Bei einem besonders wichtigen Lacktyp wird ein Lackharz aus hydroxyfunktionellen Polymeren eingesetzt, die bei der Lackhärtung mit einem isocyanatfunktionellen Härter zur Reaktion gebracht werden. Diese Polyurethanlacke zeichnen sich durch besonders gute Eigenschaften, beispielsweise durch eine überlegene Chemikalienbeständigkeit aus, dagegen besteht insbesondere, bei der Kratzfestigkeit dieser Systeme noch Verbesserungsbedarf. Typischerweise werden sie in besonders hochwertigen und hochpreisigen Anwendungsgebieten verwendet, beispielsweise als Klar- bzw. Decklacke für OEM-Lackierungen in der Automobil- und Fahrzeugindustrie. Ebenso bestehen auch die meisten Refinish-Lacke für Automobilreparaturen aus derartigen isocyanathärtenden Systemen.

Typischerweise unterscheidet man zwei unterschiedliche Polyurethan-Lacksysteme, die sogenannten 2K- und 1K-Systeme. Erstere bestehen aus zwei Komponenten, von denen eine im wesentlichen aus dem Isocyanathärter besteht, während das Lackharz mit seinen isocyanatreaktiven Gruppen in der zweiten Komponente enthalten ist. Beide Komponenten müssen dabei getrennt gelagert und transportiert werden und dürfen erst kurz vor der Verarbeitung vermischt werden, da die fertige Mischung nur eine stark eingeschränkte Topfzeit besitzt. Oftmals günstiger sind hier die sogenannten 1K-Systeme, die nur aus einer Komponente bestehen, in der neben dem Lackharz ein Härter mit geschützten Isocyanatgruppen vorliegt. 1K-Lacke werden thermisch gehärtet, wobei die Schutzgruppen der Isocyanateinheiten abgespalten werden, und die entschützten Isocyanate anschließend mit dem Lackharz reagieren können. Typische Einbrenntemperaturen von derartigen 1K-Lacken liegen bei 130-150 °C.

Besonders bei diesen hochwertigen Lacken wäre eine weitere Eigenschaftsverbesserung wünschenswert. Dies gilt insbesondere für Fahrzeuglackierungen, sowohl im OEM- als auch im Reparaturlackbereich. So ist vor allem die erreichbare Kratzfestigkeit von herkömmlichen Autolacken noch nicht hinreichend, so daß es z.B. in der Waschstraße durch Partikel im Waschwasser zu einer merklichen Verkratzung des Lackes kommt. Auf Dauer wird dadurch der Glanz des Lackes nachhaltig geschädigt. Hier wären Formulierungen wünschenswert, mit denen sich höhere Kratzfestigkeiten erreichen lassen.

Ein besonders vorteilhafter Weg zur Lösung dieser Aufgabe ist die Verwendung von Partikeln, die auf ihrer Oberfläche geschützte Isocyanatfunktionen aufweisen. Werden derartige Partikel in 1K-Polyurethanlacken eingesetzt, so werden bei der Lackhärtung auch die Isocyanatfunktionen auf den Partikeloberflächen freigesetzt und die Partikel werden chemisch in den Lack eingebaut. Zudem verbessern die geschützten Isocyanatfunktionen, die in der Regel identisch mit den geschützten Isocyanatfunktionen des Lackhärters sind, die Verträglichkeit von Partikel und Lackmatrix.

Derartige Partikel enthaltend geschützte Isocyanatfunktionen sind prinzipiell bereits bekannt. Typischerweise werden sie hergestellt, indem man einen Partikel mit freien Silicium- oder Metallhydroxidfunktionen mit einer alkoxysilylfunktionellen Organosiliciumverbindung kondensiert, deren organischer Rest eine geschützte Isocyanatfunktion enthält. Derartige maskierte Isocyanatgruppen aufweisende Organosiliciumverbindungen sind bereits beschrieben, z.B. in DE 34 24 534 A1, EP 0 212 058 B1, EP 872 500 A, JP 08-291186 oder JP 10-067787. Allerdings ist all diesen Verbindungen gemeinsam, daß sich zwischen der maskierten Isocyanatgruppe und der Silylgruppe eine Propylengruppe befindet, wodurch die Hydrolyse- und Kondensationsreaktivität dieser Silanverbindungen nur gering ist. Damit besitzen diese Verbindungen auch nur eine geringe Reaktivität gegenüber den Silicium- oder Metallhydroxidfunktionen des Partikels, so daß sie nicht oder aber nur sehr langsam reagieren, oder daß unter zur Funktionalisierung geeigneten Bedingungen, z.B. erhöhten Temperaturen, ein Teil der NCO-Schutzgruppen schon angespalten wird, wodurch die Partikel in 1K-Polyurethanlacken nicht mehr einsetzbar sind.

Dies gilt insbesondere für monoalkoxysilylguppen-funktionelle Silane mit geschützten Isocyanatfunktionen, deren Reaktivität so gering ist, daß sie zur Funktionalisierung von Partikeln meist gänzlich ungeeignet sind. Gerade der Einsatz von monofunktionellen Alkoxysilanen wäre in einigen Fällen jedoch besonders wünschenswert, da man die entsprechenden Partikel mit diesen Silanen extrem leicht mit (sterisch gut zugänglichen) geschützten Isocyanatfunktionen ausstatten könnte. So besäßen monofunktionelle Alkoxysilane den Vorteil, daß sie - eine höhere Reaktivität vorausgesetzt - auch ohne Wasserzusatz vollständig abreagieren würden und dabei auch nicht untereinander zu einer - meist weicheren - Hülle um den Partikel vernetzen würden.

Aufgabe der vorliegenden Erfindung ist daher die Bereitstellung von Partikeln mit maskierten Isocyanatfunktionen, die sich problemlos aus Vorstufen mit deutlich höherer Reaktivität herstellen lassen.

Gegenstand der Erfindung sind Partikel (P), welche über einen Kern, der aus Atomen, die ausgewählt werden aus Metall-, Silicium- und Sauerstoffatomen, oder aus Siliconharzen besteht, und über mindestens eine geschützte Isocyanatgruppe an ihrer Oberfläche verfügen,
wobei die Partikel (P) erhältlich sind durch eine Umsetzung von Partikeln (P1), die aus Atomen, die ausgewählt werden aus Metall-, Silicium- und Sauerstoffatomen, oder aus Siliconharzen bestehen und über freie Hydroxidfunktionen verfügen, mit
a) Organosilanen (A), die mindestens eine geschützte Isocyanatfunktion enthalten, oder
b) mit Organosilanen (A1), die über mindestens eine NH-, OH- oder SH-Funktion verfügen, wobei als Zwischenprodukt NH-, OH- oder SH-funktionelle Partikel (P2) erhalten werden, die in einem weiteren Reaktionsschritt mit einer Verbindung (A2), die sowohl über mindestens eine geschützte Isocyanatfunktion als auch über eine ungeschützte Isocyanatfunktion verfügt, zu den Partikeln (P) umgesetzt werden,
wobei die Organosilane (A) und (A1) vor ihrer Umsetzung mit den Partikeln (P1) entweder über ein Sauerstoff-, Schwefel- oder Stickstoffatom in α-Position zur Silyleinheit verfügen oder eine Si-O oder Si-N-Einheit besitzen, die Teil eines cyclischen Strukturelementes sind.

Gegenstand der Erfindung ist auch ein Verfahren zur Herstellung der Partikel (P).

In einer bevorzugten Ausführungsform der Erfindung besitzen die Organosilane (A) oder (A1) eine reaktive Silylfunktion der allgemeinen Formel (I)

(R¹O)₃₋ₙ(R²)ₙSi-CH₂-A- (I),

wobei
- **R¹**: Wasserstoff, Alkyl-, Cycloalkyl- oder Arylrest mit jeweils 1 bis 6 C-Atomen, wobei die Kohlenstoffkette durch nicht benachbarte Sauerstoff-, Schwefel- oder N**R³**-Gruppen unterbrochen sein kann,
- **R²**: Alkyl-, Cycloalkyl-, Aryl- oder Arylalkylrest mit jeweils 1 bis 12 C-Atomen, wobei die Kohlenstoffkette durch nicht benachbarte Sauerstoff-, Schwefel- oder N**R³**-Gruppen unterbrochen sein kann,
- **R³**: Wasserstoff, Alkyl-, Cycloalkyl, Aryl-, Arylalkyl, Aminoalkyl- oder Aspartatesterrest,
- **A**: Sauerstoff, Schwefel, eine Gruppe der Formel N**R³** oder ein Stickstoffatom, das Teil eines heterocyclischen Ringes ist, bedeuten, und
- **n**: die Werte 0, 1 oder 2 annehmen kann.

In einer weiteren bevorzugten Ausführungsform der Erfindung werden Organosilane (A1) eingesetzt, die über eine reaktive Silylfunktion der allgemeinen Formel (II) oder (IIa) 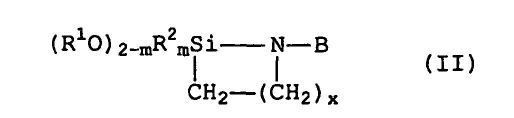 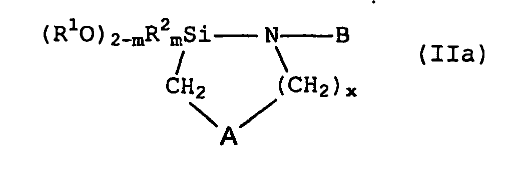 verfügen, wobei
- **B**: Wasserstoff oder einen beliebigen kohlenstoffhaltigen Rest darstellt,
- **m**: die Werte 0, 1 oder 2 und
- **x**: die Werte von 0 bis 10 annehmen können
und **A, R¹, R²** und **R³** die bei der allgemeinen Formel (I) angegebenen Bedeutungen aufweisen.

In einer weiteren bevorzugten Ausführungform der Erfindung werden als Organosilane (A1) Verbindungen der allgemeinen Formel (III) oder (IIIa) 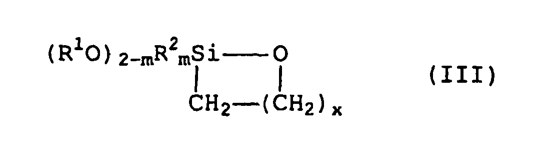 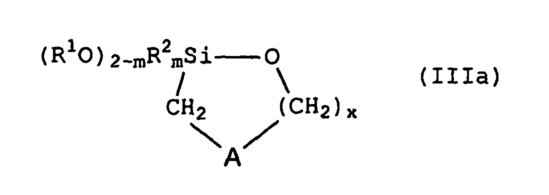 eingesetzt, wobei **m, x, A, R¹, R², R³** die bei den allgemeinen Formeln (I) und (II) angegebenen Bedeutungen aufweisen.

Bei der Gruppe **R¹** handelt es sich bei den allgemeinen Formeln (I), (II), (IIa), (III) und (IIIa) bevorzugt um Methyl- oder Ethylreste. Bei der Gruppe **R²** handelt es sich bevorzugt um Methyl-, Ethyl-, Isopropyl- oder Phenylreste. Der bevorzugte Wert für **m** beträgt 2, während für x Werte von 1 bis 4 bevorzugt und ein Wert von 2 besonders bevorzugt wird. **R³** weist vorzugsweise höchstens 10 Kohlenstoffatome, insbesondere höchstens 4 Kohlenstoffatome auf. **B** weist vorzugsweise höchstens 18 Kohlenstoffatome auf. **B** stellt bevorzugt eine Alkyl-, Cycloalkyl, Alkenyl-, Aryl, Arylalkyl, Silylalkyl- oder Silylgruppe dar, die entweder unsubstituiert oder aber durch Halogenatome, Hydroxyl- und/oder Aminfunktionen substituiert ist. Dabei kann die Hauptkette von **B** durch Sauerstoff, Schwefel oder **NR³**-Gruppen unterbrochen sein.

Der Erfindung liegt die überraschende Tatsache zugrunde, daß die Silane (A) bzw. (A1) eine extrem hohe Reaktivität gegenüber den freien Hydroxidfunktionen der Partikel (P1) aufweisen. Die freien Hydroxidfunktionen sind Metall- oder Siliciumhydroxidfunktionen.

So sind die Silane (A) bzw. (A1) um ein Vielfaches reaktiver als herkömmliche Organosilane, bei denen die Alkoxysilylgruppe durch einen Propylspacer von der organischen Funktionalität getrennt sind. Dies gilt sowohl für die Silane mit Alkoxysilylgruppen der allgemeinen Formel (I), die in α-Position zur Silyleinheit ein Heteroatom aufweisen, als auch für die cyclischen Silane der allgemeinen Formeln (II), (IIa), (III) und (IIIa). Auf Grund dieser hohen Reaktivität reagieren die Organosilane (A) bzw. (A1) mit den Partikeln (P1) deutlich schneller, und die Reaktion verläuft problemlos und vollständig ab. Dabei wird diese Reaktion oftmals erst durch die hohe Reaktivität der Silane möglich. Auch monofunktionelle Silane, d.h. Silane mit Silylgruppen der allgemeinen Formel (I) (II), (IIa), (III) oder (IIIa) mit n = 2 bzw. m = 2 sind hinreichend reaktiv gegenüber den Partikeln (P1) und sind somit zur Herstellung von erfindungsgemäßen Partikeln (P) mit geschützten Isocyanatfunktionen geeignet. Werden monofunktionelle Silane eingesetzt, so kann auf eine Wasserzugabe zur Hydrolyse der Alkoxysilylgruppen gänzlich verzichtet werden.

Die Reaktion zwischen den Partikeln (P1) und den Organosilanen (A) bzw. (A1) findet direkt beim Durchmischen der Reaktionspartner statt. Dabei können die Partikel (P1) sowohl als Dispersion in einem wäßrigen oder auch wasserfreien Lösungsmittel als auch im festen Zustand vorliegen. Im letztgenannten Fall kann die Durchmischung beispielsweise in einem Wirbelbettreaktor oder anderen bekannten Mischgeräten, wie z.B. Pflugscharmischern u.ä. erfolgen.

Bei der Herstellung der Partikel (P) aus Partikeln (P1) können zur Oberflächenmodifizierung neben den Silanen (A) und (A1) zusätzlich auch noch andere Silane (S1), Silazane (S2) oder Siloxane (S3) eingesetzt werden. Die Silane (S1) verfügen dabei entweder über Hydroxysilylgruppen oder aber über hydrolysierbare Silylfunktionen, wobei letztere bevorzugt werden. Daneben können diese Silane über weitere Organofunktionen verfügen, es können aber auch Silane (S1) ohne weitere Organofunktionen verwendet werden. Dabei können die Silane (A) bzw. (A1) als Mischung mit den Silanen (S1), Silazanen (S2) oder Siloxanen (S3) eingesetzt werden. Daneben können die Partikel auch sukzessive mit den unterschiedlichen Silantypen funktionalisiert werden.

Besonders bevorzugt werden dabei Mischungen aus Silanen (A) bzw. (A1) mit Silanen (S1) der allgemeinen Formel (IV)

(R¹O)₄-a-b-c(R²)ₐ(Z)_{c}Si(R⁴)_{b} (IV)

eingesetzt, wobei
- **R¹, R²** und **R³**: die bei der allgemeinen Formel (I) angegebenen Bedeutungen aufweisen, und
- **R⁴**: SiC-gebundene Kohlenwasserstoffreste mit 1 bis 18 Kohlenstoffatomen, die gegebenenfalls mit Halogenatomen, Aminogruppen, Ethergruppen, Estergruppen, Epoxygruppen, Mercaptogruppen, Cyanogruppen, Isocyanatgruppen, Phosphonatgruppen, Methacrylgruppen oder (Poly)glykolresten substituiert sind, wobei letztere aus Oxyethylen- und/oder Oxypropyleneinheiten aufgebaut sind, bedeutet,
- **Z**: Halogenatom, Pseudohalogenrest, Si-N-gebundene Aminreste, Amidreste, Oximreste, Aminoxyreste und Acyloxyreste bedeutet,
- **a**: die Werte 0, 1, 2 oder 3,
- **b**: die Werte 0, 1, 2 oder 3,
- **c**: die Werte 0, 1, 2 oder 3,
- **a+b+c**: die Werte 0, 1, 2, 3 oder 4 bedeuten.

Dabei steht a bevorzugt für 0, 1 oder 2, während b und c bevorzugt 0 oder 1 bedeuten.

Als Silazane (S2) bzw. Siloxane (S3) werden besonders bevorzugt Hexamethyldisilazan bzw. Hexamethyldisiloxan oder lineare Siloxane mit Kettenenden mit oder ohne Organofunktion eingesetzt.

Als Partikel (P1) können sämtliche Metalloxid- und Metallmischoxid-Partikel (z.B. Aluminiumoxide wie Korund, Aluminiummischoxide mit anderen Metallen und/oder Silicium, Titanoxide, Zirkonoxide, Eisenoxide etc.), Siliciumoxid-Partikel (z.B. pyrogene Kieselsäure, gefällte Kieselsäure, kolloidale Kieselsäure) oder Siliciumoxid-Verbindungen, bei denen einige Valenzen des Siliciums mit organischen Resten versehen sind, d.h. Siliconharze, eingesetzt werden. Diese Partikel (P1) zeichnen sich dadurch aus, daß sie auf ihrer Oberfläche über Metall- und/oder Siliciumhydroxid-Funktionen verfügen, über die eine Reaktion mit den Organosilanen (A) oder (A1) erfolgen kann. Die Partikel (P1) besitzen bevorzugt einen mittleren Durchmesser von 1 nm bis 100 µm, besonders bevorzugt von 10 nm bis 200 nm.

In einer bevorzugten Ausführungsform der Erfindung bestehen die Partikel (P1) aus pyrogener Kieselsäure, die in einer Flammenreaktion aus Siliciumverbindungen hergestellt wird, z.B. aus Siliciumtetrachlorid oder Methyldichlorsilan, oder Hydrogentrichlorsilan oder Hydrogenmethyldichlorsilan, oder anderen Methylchlorsilanen oder Alkylchlorsilanen, auch im Gemisch mit Kohlenwasserstoffen, oder beliebigen verflüchtigbaren oder versprühbaren Gemischen aus Organosiliciumverbindungen. Die Herstellung der Kieselsäure kann dabei wahlweise mit und ohne Zusatz von Wasser erfolgen, zum Beispiel im Schritt der Reinigung; bevorzugt ist kein Zusatz von Wasser.

Vorzugsweise weist die pyrogene Kieselsäure eine Dichte an für chemische Reaktionen zugänglichen Oberflächen-Silanolgruppen (Si-OH) von kleiner als 2,5 SiOH/nm², vorzugsweise kleiner 2,1 SiOH/nm², bevorzugt von kleiner als 2 SiOH/nm², besonders bevorzugt von 1,7 bis 1,9 SiOH/nm² auf.

Es können auch auf naßchemisch hergestelltem Weg oder bei hoher Temperatur (größer 1000 °C) hergestellte Kieselsäuren eingesetzt werden. Besonders bevorzugt sind pyrogen hergestellte Kieselsäuren. Es können hydrophile Kieselsäuren eingesetzt werden, die frisch hergestellt direkt aus dem Brenner kommen, zwischengelagert oder bereits handelsüblich verpackt sind. Es können auch hydrophobierte Kieselsäuren, z.B. handelsübliche hydrophobierte Kieselsäuren, eingesetzt werden.

Es können unverdichtete Kieselsäuren mit Schüttdichten vorzugsweise kleiner 60 g/l, aber auch verdichtete Kieselsäuren mit Schüttdichten vorzugsweise größer 60 g/l, eingesetzt werden.

Es können auch Gemische aus verschiedenen Metalloxiden oder Kieselsäuren eingesetzt werden, so z.B. Mischungen aus Metalloxiden oder Kieselsäuren unterschiedlicher BET-Oberfläche, oder Mischungen aus Metalloxiden mit unterschiedlichem Hydrophobier- oder Silyliergrad.

Die Kieselsäure kann in kontinuierlichen, oder diskontinuierlichen Verfahren hergestellt werden, das Verfahren zur Silylierung kann aus einem oder mehreren Schritten aufgebaut sein. Bevorzugt wird die silylierte Kieselsäure mittels eines Verfahren hergestellt, bei dem der Herstellungsprozeß in getrennten Schritten erfolgt: (A) zunächst Herstellung der hydrophilen Kieselsäure, sodann (B) die Silylierung der Kieselsäure durch
a) Beladung der hydrophilen Kieselsäure mit Silan (A) oder (A1),
b) Reaktion der hydrophilen Kieselsäure mit dem Silan (A) oder (A1) und
c) Reinigung der Kieselsäure von überschüssigem Silan (A) oder (A1).

Die Oberflächenbehandlung wird bevorzugt in einer Atmosphäre durchgeführt, die nicht zur Oxidation der silylierten Kieselsäure führt, d.h. bevorzugt weniger als 10 Vol.-% Sauerstoff, besonders bevorzugt weniger als 2,5 Vol.-%, wobei beste Ergebnisse bei weniger als 1 Vol.-% Sauerstoff erzielt werden.

Belegung, Reaktion und Reinigung können als diskontinuierlicher oder kontinuierlicher Prozess durchgeführt werden.
Aus technischen Gründen bevorzugt ist eine kontinuierliche Reaktionsführung.

Die Belegung erfolgt bevorzugt bei Temperaturen von (-30)-250 °C, bevorzugt 20-150 °C, im besonderen bevorzugt 20-80 °C; bevorzugt wird beim Belegungsschritt auf 30-50 °C gekühlt.
Die Verweilzeit beträgt 1 min - 24 h, bevorzugt 15-240 min, aus Gründen der Raumzeitausbeute besonders bevorzugt 15-90 min. Der Druck bei der Belegung reicht bevorzugt von einem schwachen Unterdruck von 0,2 bar bis zu einem Überdruck von 100 bar, wobei aus technischen Gründen Normaldruck, das heißt druckfreies Arbeiten gegenüber Außen-/Atmosphären-Druck bevorzugt ist.

Das Silan (A) oder (A1) wird bevorzugt als Flüssigkeit zugefügt und insbesondere der pulverförmigen Kieselsäure zugemischt. Dies geschieht vorzugsweise durch Düsentechniken, oder vergleichbare Techniken, wie effektive Verdüsungstechniken, wie Verdüsen in 1-Stoffdüsen unter Druck (vorzugsweise bei 5-20 bar), Versprühen in 2-Stoffdüsen unter Druck (vorzugsweise Gas und Flüssigkeit 2-20 bar), Feinstverteilen mit Atomizern oder Gas-Feststoff-Austauschaggregaten mit beweglichen, rotierenden oder statischen Einbauten, die eine homogene Verteilung des Silans mit der pulverförmigen Kieselsäure erlauben.
Bevorzugt wird das Silan (A) oder (A1) als feinstverteiltes Aerosol zugefügt, dadurch gekennzeichnet, daß das Aerosol eine Sinkgeschwindigkeit von 0,1 - 20 cm/s und eine Tropfengröße mit einem aerodynamischen Partikelradius von 5 - 25 µm aufweist. Bevorzugt erfolgt die Beladung der Kieselsäure und die Reaktion mit dem Silan A oder A1 unter mechanischer oder gasgetragener Fluidisierung. Besonders bevorzugt ist die mechanische Fluidisierung.
Eine Gas-getragene Fluidisierung kann durch alle inerten Gase erfolgen, die nicht mit dem Silan (A) oder (A1), der Kieselsäure, und der silylierten Kieselsäure reagieren, also nicht zu Nebenreaktionen, Abbaureaktionen, Oxidationsvorgängen und Flammen- und Explosionserscheinungen führen, wie vorzugsweise N₂, Ar, andere Edelgase, CO₂, etc. Die Zuführung der Gase zur Fluidisierung erfolgt bevorzugt im Bereich von Leerrohrgasgeschwindigkeiten von 0,05-5 cm/s, besonders bevorzugt von 0,5-2,5 cm/s.
Besonders bevorzugt ist die mechanische Fluidisierung, die ohne zusätzlichen über die Inertisierung hinausgehenden Gaseinsatz, durch Flügelrührer, Ankerrührer und sonstige geeignete Rührorgane erfolgt.
In einer besonders bevorzugten Ausführungsform werden nicht abreagiertes Silan (A) oder (A1) und Abgase aus dem Reinigungsschritt wieder in den Schritt der Belegung und Beladung der Kieselsäure zurückgeführt; dies kann teilweise oder vollständig geschehen, bevorzugt zu 10-90 % des gesamten Volumenstromes der aus der Abreinigung austretenden Gasvolumina.
Dies geschieht in geeignet temperierten Vorrichtungen.
Diese Rückführung erfolgt bevorzugt in nicht-kondensierter Phase, also als Gas oder als Dampf. Diese Rückführung kann als Stofftransport entlang eines Druckausgleichs erfolgen oder als gesteuerter Stofftransport mit den technisch üblichen Systemen des Gastransports, wie Ventilatoren, Pumpen, Druckluftmebranpumpen. Da die Rückführung der nichtkondensierten Phase bevorzugt ist, empfiehlt sich gegebenenfalls die Beheizung der rückführenden Leitungen.
Die Rückführung des nicht abreagierten Silans (A) oder (A1) und der Abgase kann dabei zwischen 5 und 100 Gew.-%, bezogen auf deren Gesamtmasse, bevorzugt zwischen 30 und 80 Gew.-%, liegen. Die Rückführung kann dabei, bezogen auf 100 Teile frisch eingesetztes Silan zwischen 1 und 200 Teile, bevorzugt 10 bis 30 Teile betragen.
Die Rückführung der Abreinigungprodukte der Silylierreaktion in die Belegung erfolgt bevorzugt kontinuierlich.

Die Reaktion erfolgt bevorzugt bei Temperaturen von 40-200 °C, bevorzugt bei Temperaturen von 40-160 °C und besonders bevorzugt bei 80-120 °C.
Die Reaktionszeit beträgt 5 min bis 48 h, vorzugsweise 10 min bis 5 h.
Wahlweise können protische Lösungsmittel hinzugefügt werden, wie flüssige oder verdampfbare Alkohole oder Wasser; typische Alkohole sind iso-Propanol, Ethanol und Methanol. Es können auch Gemische der oben genannten protischen Lösungsmittel zugefügt werden. Vorzugsweise werden 1-50 Gew.-% an protischen Lösungsmittel bezogen auf die Kieselsäure zugefügt, besonders bevorzugt 5-25 Gew.-%. Besonders bevorzugt ist Wasser. Wahlweise können saure Katalysatoren (Lewis oder Brönsted Säuren), z.B. Chlorwasserstoff, oder basische Katalysatoren (Lewis oder Brönsted Basen), z.B. Ammoniak, zugesetzt werden. Bevorzugt werden diese in Spuren zugesetzt, d.h. kleiner als 1000 ppm. Besonders bevorzugt werden keine Katalysatoren zugesetzt.

Die Abreinigung erfolgt bei einer Reinigungstemperatur von 20-200 °C, bevorzugt bei 50-150°C, besonders bevorzugt bei 50-100 °C. Der Reinigungsschritt ist vorzugsweise durch Bewegung gekennzeichnet, wobei langsame Bewegung und geringes Durchmischen besonders bevorzugt ist. Die Rührorgane werden dabei vorteilhafterweise so eingestellt und bewegt, daß bevorzugt ein Mischen und ein Fluidisieren, jedoch nicht völlige Verwirbelung, eintritt.
Der Reinigungsschritt kann weiterhin durch erhöhten Gaseintrag gekennzeichnet sein, entsprechend einer Leerrohrgasgeschwindigkeit von vorzugsweise 0,001-10 cm/s, bevorzugt 0,01-1 cm/s. Dies kann durch alle inerten Gase erfolgen, die nicht mit dem Silan (A) oder (A1), der Kieselsäure, und der silylierten Kieselsäure reagieren, also nicht zu Nebenreaktionen, Abbaureaktionen, Oxidationsvorgängen und Flammen- und Explosionserscheinungen führen, wie vorzugsweise N₂, Ar, andere Edelgase, CO₂, etc.

Zusätzlich können während der Silylierung oder im Anschluss an die Reinigung vorzugsweise Verfahren zur mechanischen Verdichtung der Kieselsäure eingesetzt werden, wie zum Beispiel Presswalzen, Mahlaggregate, wie Kollergänge und wie Kugelmühlen, kontinuierlich oder diskontinuierlich, Verdichtung durch Schnecken oder Schraubenmischer, Schraubenverdichter, Brikettierer, oder Verdichten durch Absaugen des Luft- oder Gasinhaltes durch geeignete Vakuummethoden.

Besonders bevorzugt ist die mechanische Verdichtung während der Silylierung durch Presswalzen, oben genannte Mahlaggregate wie Kugelmühlen oder Verdichtung durch Schnecken, Schraubenmischer, Schraubenverdichter, Brikettierer.

In einer weiteren besonders bevorzugten Verfahrensweise werden im Anschluss an die Reinigung Verfahren zur mechanischen Verdichtung der Kieselsäure eingesetzt, wie Verdichten durch Absaugen des Luft- oder Gasinhaltes durch geeignete Vakuummethoden oder Presswalzen oder Kombination von beiden Verfahren.

Zusätzlich können in einer besonders bevorzugten Verfahrensweise im Anschluss an die Reinigung Verfahren zur Desagglomerierung der Kieselsäure eingesetzt werden, wie Stiftmühlen, Hammermühlen, Gegenstrommühlen, Prallmühlen oder Vorrichtungen zur Mahlsichtung.

Die Silane (A) oder (A1) werden vorzugsweise in einer Menge größer 0,5 Gew.-% (bezogen auf die Kieselsäure), bevorzugt größer 3 Gew.-% (bezogen auf die Kieselsäure), besonders bevorzugt 5 Gew.-% (bezogen auf die Kieselsäure) eingesetzt.

Zur Oberflächenmodifizierung können die Silane (A) oder (A1) alleine oder in beliebigen Gemischen mit anderen Silanen (A) oder (A1) eingesetzt werden. Besonders bevorzugt wird eine Ausführung der Erfindung, bei der die Partikel (P) aus pyrogener Kieselsäure, Silanen (A) oder (A1) sowie weiteren Silanen (S1), die bevorzugt der Formel (IV) entsprechen, Silazanen (S2) und/oder Siloxanen (S3) eingesetzt. Die verschiedenen Silane werden dabei bevorzugt als Mischung eingesetzt.

Die silylierte pyrogene Kieselsäure ist insbesondere dadurch charakterisiert, daß sie eine mittlere Primärteilchen-Partikelgröße kleiner als 100 nm, bevorzugt eine mittlere Primärteilchen-Partikelgröße von 5 bis 50 nm aufweist, wobei diese Primärteilchen meist nicht isoliert in der Kieselsäure existieren, sondern Bestandteile größerer Aggregate (Definition nach DIN 53206) sind, die einen Durchmessern von 100 bis 1000 nm aufweisen.

Ferner sind die silylierten pyrogenen Kieselsäuren insbesondere dadurch charakterisiert, daß die Kieselsäure eine spezifischen Oberfläche von 10 bis 400 m²/g (gemessen nach der BET Methode nach DIN 66131 und 66132) aufweist, wobei die Kieselsäure eine fraktale Dimension der Masse Dₘ von kleiner oder gleich als 2,8, bevorzugt gleich oder kleiner 2,7, besonders bevorzugt von 2,4 bis 2,6, und eine Dichte an Oberflächen-Silanolgruppen SiOH von kleiner als 1,5 SiOH/nm², bevorzugt von kleiner als 0,5 SiOH/nm², besonders bevorzugt von kleiner als 0,25 SiOH/nm². aufweist.

In einer weiteren bevorzugten Ausführung der Erfindung werden als Partikel (P1) kolloidale Silicium- oder Metalloxide eingesetzt, die im allgemeinen als Dispersion der entsprechenden Oxidteilchen von Submikrongröße in einem wäßrigen oder anderen Lösungsmittel vorliegen. Dabei können unter anderem die Oxide der Metalle Aluminium, Titan, Zirkonium, Tantal, Wolfram, Hafnium, Zinn verwendet werden. Besonders bevorzugt werden organische Lösungen kolloidaler Kieselsole eingesetzt.

Die Herstellung der erfindungsgemäßen Partikel (P) aus kolloidalen Silicium- oder Metalloxiden kann nach verschiedenen Verfahren erfolgen. Bevorzugt erfolgt sie jedoch durch Zugabe der Silane (A) - gegebenenfalls in Kombination mit anderen Silanen (S1), Silazanen (S2) oder Siloxanen (S3) - zum wässrigen oder organischen Sol. Dieses Sol ist gegebenenfalls ionisch, d.h. sauer, z.B. durch Salzsäure, oder basisch, z.B. durch Ammoniak, oder sterisch, z.B. durch Alkohole, stabilisiert. Die Reaktion erfolgt in der Regel bei Temperaturen von 0-200 °C, bevorzugt bei 20-80 °C und besonders bevorzugt bei 20-60 °C. Die Reaktionszeiten liegen typischerweise zwischen 5 Min und 48 h, bevorzugt zwischen 1 und 24 h. Wahlweise können auch noch saure, basische oder schwermetallhaltige Katalysatoren zugesetzt werden. Bevorzugt werden diese in Spuren < 1000 ppm einsetzt. Besonders bevorzugt wird jedoch auf den Zusatz von gesonderten Katalysatoren verzichtet.

Ebenfalls bevorzugt werden zudem Partikel (P1), die aus Siliconharzen der allgemeinen Formel (V)

(R⁵₃SiO_{1/2})ₑ(R⁵₂SiO_{2/2})_{f}(R⁵SiO_{3/2})_{g}(SiO_{4/2})ₕ (V)

bestehen, wobei
- **R⁵**: eine O**R¹**-Funktion, eine OH-Funktion, einen gegebenenfalls halogen-, hydroxyl-, amino-, epoxy-, phosphonat-, thiol-, (meth)acryl-, oder auch NCO-substituierten Kohlenwasserstoffrest mit 1-18 Kohlenstoffatomen,
- **e**: einen Wert von größer oder gleich 0,
- **f**: einen Wert von größer oder gleich 0,
- **g**: einen Wert von größer oder gleich 0,
- **h**: einen Wert von größer oder gleich 0 bedeuten und die Summe aus **e + f + g + h** mindestens einen Wert von mindestens 1, vorzugsweise mindestens 5 bedeutet.

Vorzugsweise sind mindestens 70 Mol-% aller Reste **R⁵** Methyl-, Ethyl-, Isopropyl- oder Phenylreste.
In einer bevorzugten Ausführungsform weist bei den Siliconharzen der allgemeinen Formel (V) die Summe aus **e + h** mindestens 90 Mol-% der Summe aus **e + f + g + h** auf.

Die Herstellung der erfindungsgemäßen Partikel (P) aus Siliconharzen entsprechend der Formel (V) und Silanen (A) kann über die oben beschriebenen Verfahren erfolgen.

Bei einer bevorzugten Ausführungsform der Erfindung werden die Partikel (P) hergestellt durch eine Umsetzung von OH-funktionellen Partikeln (P1) mit Organosilanen (A) der allgemeinen Formel (VI)

(R¹O)₃₋ₙ(R²)ₙSi-CH₂-NH-C(O)-X (VI),

wobei
- **R¹** und **R²**: die bei der allgemeinen Formeln (I) angegebenen Bedeutungen aufweisen und
- **X**: eine Schutzgruppe darstellt, die bei Temperaturen zwischen 80 und 300 °C in Form von HX abgespalten wird, und dabei eine Isocyanatfunktion freisetzt.

Als Schutzgruppen HX können sekundäre oder tertiäre Alkohole, wie Isopropanol oder t-Butanol, CH-acide Verbindungen wie z.B. Malonsäurediethylester, Acetylaceton, Acetessigsäureethylester, Oxime wie z.B. Formaldoxim, Acetaldoxim, Methylethylketoxim, Cyclohexanonoxim, Acetophenonoxim, Benzophenonoxim oder Diethylenglyoxim, Lactame, wie z.B. Caprolactam, Valerolactam, Butyrolactam, Phenole wie Phenol, o-Methylphenol, N-Alkylamide wie z.B. N-Methylacetamid, Imide wie Phthalimid, sekundäre Amine wie z.B. Diisopropylamin, Imidazol, 2-Isopropylimidazol, Pyrazol, 3,5-Dimethylpryazol, 1,2,4-Triazol und 2,5 Dimethyl-1,2,4-triazol eingesetzt werden. Vorzugsweise werden dabei Schutzgruppen wie Butanonoxim, 3,5-Dimethylpyrazol, Caprolactam, Malonsäurediethylester, Malonsäuredimethylester, Acetessigester, Diisopropylamin, Pyrrolidon, 1,2,4-Triazol, Imidazol und 2-Isopropylimidazol verwendet. Besonders bevorzugt werden Schutzgruppen eingesetzt, die eine niedrige Einbrenntemperatur ermöglichen wie z.B. Malonsäurediethylester, Malonsäuredimethylester, Butanonoxim, Diisopropylamin, 3,5-Dimethylpyrazol und 2-Isopropylimidazol.

Bei einer weiteren bevorzugten Ausführungsform der Erfindung werden die Partikel (P) hergestellt durch eine Umsetzung von OH-funktionellen Partikeln (P1) mit Organosilanen (A) der allgemeinen Formel (VII)

(R¹O)₃₋ₙ(R²)ₙSi-CH₂-NR³-C(O)-NH-Y-(NH-C(O)-X)_{z} (VII),

wobei
- **R¹, R², R³** und **X**: die bei den Formeln (I) bis (VI) angegebenen Bedeutungen aufweisen,
- **Y**: einen (z+1)-funktionellen aliphatischen oder aromatischen Rest darstellt und
- **z**: eine Zahl von 1-4, bevorzugt 1 oder 2, bedeutet.

Silane (A) der allgemeinen Formel (VII) werden vorzugsweise hergestellt durch eine Umsetzung von Di- oder Polyisocyanaten der allgemeinen Formel (VIII)

Y(NCO)_{z+1} (VIII)

mit Aminosilanen (A1), die über Strukturelemente der Formel (I) verfügen, und Schutzgruppen HX.

Besonders bevorzugt werden Silane (A) der allgemeinen Formel (VII) hergestellt durch eine Umsetzung von Di- oder Polyisocyanaten der allgemeinen Formel (VIII) mit Aminosilanen (A1) der allgemeinen Formel (IX)

(R¹O)₃₋ₙ(R²)ₙSi-CH₂-NHR³ (IX),

wobei sämtliche übrigen Variablen die bei der allgemeinen Formel (I) angegebenen Bedeutungen aufweisen.

Dabei ist die Reihenfolge der Reaktionsschritte beliebig, d.h. das Di- oder Polyisocyanat kann in einem ersten Reaktionsschritt sowohl mit der Schutzgruppe HX als auch mit dem Silan (A1) umgesetzt werden, wobei die Mengenverhältnisse so gewählt werden, daß jeweils nur ein Teil der Isocyanatgruppen abreagiert. In einem zweiten Reaktionsschritt werden die übrigen Isocyanatgruppen dann mit dem jeweils noch fehlenden Reaktionspartner umgesetzt. Die dabei erhaltene Mischung enthaltend das Silan der allgemeinen Formel (VII) ist bevorzugt isocyanatfrei. Selbstverständlich kann das Di- oder Polyisocyanat auch direkt mit einer Mischung aus der Schutzgruppe HX und dem Silan (A1) umgesetzt werden. Es können beliebige Lösungsmittel oder Lösungsmittelgemische mitverwendet werden, wobei vorzugsweise sämtliche Reaktionskomponenten in diesem Lösungsmittel (-gemisch) löslich sind.

Als Di- oder Polyisocyanate der allgemeinen Formel (VIII) können prinzipiell sämtliche gebräuchliche Isocyanate eingesetzt werden, wie sie in der Literatur vielfach beschrieben sind. Gängige Diisocyanate sind beispielsweise Diisocyanatodiphenylmethan (MDI), sowohl in Form von rohem oder technischem MDI als auch in Form reiner 4,4'- bzw. 2,4'-Isomeren oder deren Mischungen, Tolylendiisocyanat (TDI) in Form seiner verschiedenen Regioisomere, Diisocyanatonaphthalin (NDI), Isophorondiisocyanat (IPDI), perhydriertes MDI (H-MDI), Tetramethylendiisocyanat, 2-Methyl-pentamethylendiisocyanat, 2,2,4-Trimethylhexamethylendiisocyanat, Dodecamethylendiisocyanat, 1,4-Diiocyanatocyclohexan, 1,3-Diisocyanato-4-methylcyclohexan oder auch Hexamethylendiisocyanat (HDI). Beispiele für Polyisocyanate sind polymeres MDI (P-MDI), Triphenylmethantriisocanat sowie auch sämtliche Isocyanurat- oder Biuret-trimerisate der oben aufgeführter Diisocyanate. Sämtliche Di- und/oder Polyisocyanate können einzeln oder auch in Mischungen eingesetzt werden. Falls eine besondere UV-Stabilität der Produkte erwünscht wird, werden bevorzugt aliphatische Isocyanate bzw, deren Trimerisate oder Oligomere, besonders bevorzugt IPDI und HDI sowie deren Trimerisate, verwendet.

In einer besonders bevorzugten Variante dieses Verfahrens wird das Di- oder Polyisocyanat zuerst mit einem Unterschuß einer Schutzgruppe HX umgesetzt, wobei eine Mischung erhalten wird, in der zwischen 50 und 99 % aller Isocyanatgruppen geschützt sind. Anschließend werden alle ungeschützten Isocyanatgruppen mit dem Aminosilan (A1) der allgemeinen Formel (IX) umgesetzt. Gegebenenfalls kann dabei auch ein Lösungsmittel zugegen sein. Es wird eine Mischung erhalten, die neben Silanen (A) der allgemeinen Formel (VII) auch noch vollständig geschützte Isocyanate der allgemeinen Formel (X)

Y-(NH-C(0)-X)_{z+1} (IX),

und gegebenenfalls auch noch Silane der allgemeinen Formel (XI)

[(R¹O)₃₋ₙ(R²)ₙSi-CH₂-NR₃-C(O)-NH]_{y}-Y-(NH-C(O)-X)_{z+1-y} (XI),

wobei **y** einem Wert von 2 bis z+1 annehmen kann und alle übrigen Variablen die oben angegebenen Bedeutungen aufweisen. Dabei werden die stöchiometrischen Verhältnisse sowie die Reaktionsführung bevorzugt so gewählt, daß der Gehalt an Silanen der allgemeinen Formel (XI) möglichst niedrig ist.

Diese Mischung, die Silane der allgemeinen Formel (VII) enthält, kann direkt mit den Partikeln (P1), die über freie Metall- oder Siliciumhydroxidfunktionen verfügen, umgesetzt werden, wobei die Silane der allgemeinen Formel (VII) mit den Partikeln (P1) zu den Partikeln (P) reagieren. Der dabei freiwerdende Alkohol **R¹**OH kann gegebenenfalls destillativ abgetrennt werden. Diese Mischung, enthaltend die Partikel (P) sowie vollständig geschützte Di- oder Polyisocyanate der allgemeinen Formel (X), kann - sowohl in lösemittelhaltiger als auch lösemittelfreier Form - ohne weitere Aufarbeitung als alleiniger Härter oder als Teil der Härterkomponente in einem Lack eingesetzt werden. Enthält der Lack daneben noch weitere Härter, so handelt es sich dabei bevorzugt um Isocyanat- oder Melaminhärter, besonders bevorzugt um geschützte Isocyanathärter. Bevorzugt werden die beschriebenen Mischungen als Härter bzw. als Teil der Härterkomponente in 1K-PU-Lacken eingesetzt.

Bei einer weiteren bevorzugten Ausführungsform der Erfindung werden die Partikel (P) hergestellt, indem OH-funktionelle Partikel (P1) mit Organosilanen (A1) der allgemeinen Formel (II), (IIa), (III), (IIIa), oder (IX) umgesetzt werden, wobei man als Zwischenprodukt aminoalkyl- bzw. hydroxyalkylfunktionelle Partikel (P2) erhält. Diese werden dann in einem 2. Reaktionsschritt mit einem teilgeschützten Isocyanat (A2) der allgemeinen Formel (XII)

OCN-Y-(NH-C(O)-X)_{z} (XII),

zu den Partikeln (P) umgesetzt, wobei die Variablen **Y, X** und **z** die bei der allgemeinen Formel (VII) angegebenen Bedeutungen besitzen.

Die Mengenverhältnisse zwischen den aminoalkyl- bzw. hydroxyalkyl-funktionellen Partikeln (P2) und den teilgeschützten Isocyanaten (A2) werden dabei bevorzugt so gewählt, daß die resultierende Mischung enthaltend die Partikel (P) frei von ungeschützten Isocyanatgruppen ist.

Der im ersten Reaktionsschritt gegebenenfalls freiwerdende Alkohol wird bevorzugt destillativ, gegebenenfalls unter reduziertem Druck, entfernt. In einem bevorzugten Verfahren wird die gesamte Synthese der Partikel (P) ausgehend von den Partikeln (P1) über die als Zwischenprodukt gebildeten Partikel (P2) als Eintopfsynthese durchgeführt.

Die teilgeschützten Isocyanate (A2) der allgemeinen Formel (XII) werden hergestellt durch die Umsetzung eines Di- oder Polyisocyanates der allgemeinen Formel (VIII) mit Schutzgruppen HX.

In einer besonders bevorzugten Variante dieses Verfahrens wird das teilgeschützte Isocyanat der allgemeinen Formel (XII) hergestellt durch einfaches Vermischen eines Di- oder Polyisocyanat der allgemeinen Formel (VIII) mit einer Schutzgruppe HX, wobei die Schutzgruppe HX im Unterschuß eingesetzt wird, so daß eine Mischung erhalten wird, in der zwischen 50 und 99 % aller Isocyanatgruppen geschützt sind. Diese Mischung enthält neben dem teilgeschützten Isocyanat (A2) der allgemeinen Formel (XII) auch noch vollständig geschützte Isocyanate der allgemeinen Formel (X) sowie gegebenenfalls auch noch Isocyanate der allgemeinen Formel (XIII)

(OCN)_{y}-Y-(NH-C(O)-X)_{z+1-y} (XIII),

wobei alle Variablen die oben angegebene Bedeutungen aufweisen. Dabei werden die stöchiometrischen Verhältnisse sowie die Reaktionsführung bevorzugt so gewählt, daß der Gehalt an Isocyanaten der allgemeinen Formel (XIII) möglichst niedrig ist.

Diese Mischung enthaltend teilgeschützte Isocyanate (A2) entsprechend der Formel (XII) kann direkt mit den aminoalkyl- oder hydroxyalkyl-funkionellen Partikeln (P2) umgesetzt werden, wobei die teilgeschützten Isocyanate (A2) mit den Partikeln (P2) zu den Partikeln (P) reagieren. Diese Mischung, enthaltend die Partikel (P) sowie vollständig geschützte Di- oder Polyisocyanate der allgemeinen Formel (X), kann - sowohl in lösemittelhaltiger als auch lösemittelfreier Form - ohne weitere Aufarbeitung als Härterkomponente oder als Teil der Härterkomponente in einem Lack eingesetzt werden.

Bei einer besonders bevorzugten Ausführungsform der Erfindung werden die Partikel (P) hergestellt, indem OH-funktionelle Partikel (P1) mit Organosilanen (A1) der Formel (XIV) 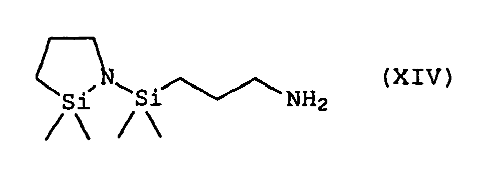 umgesetzt werden, und die dabei als Zwischenprodukt erhaltenen aminofunktionellen Partikel (P2) in einem 2. Reaktionsschritt mit einem teilgeschützten Isocyanat (A2) der allgemeinen Formel (XII) zum Endprodukt (P) umgesetzt werden.

Die dabei im ersten Reaktionsschritt ablaufende Reaktion zwischen den Partikeln (P1) mit Hydroxidgruppen und dem Silan der allgemeinen Formel (XIV) ist in dem folgenden Schema dargestellt (die Si/Me-OH-Gruppen stellen in diesem Schema die entsprechenden Funktionen auf der Oberfläche der Partikel (P1) dar) :

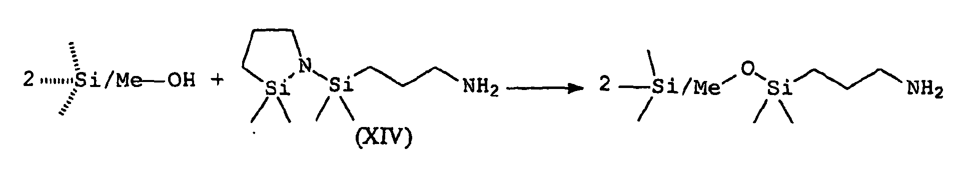

Das Silan der allgemeinen Formel (XIV) besitzt dabei dieselbe extrem hohe Reakivität gegenüber den Silicium- oder Metallhydroxidfunktionen wie Silane enthaltend hochreaktive Silylfunktionen der allgemeinen Formel (I).

Das Silan der allgemeinen Formel (XIV) besitzt jedoch den zusätzlichen Vorteil, daß bei dessen Umsetzung mit den Partikeln (P1) kein Alkohol freigesetzt wird.

Beim zweiten Reaktionsschritt werden die Mengenverhältnisse zwischen den aminofunktionellen Partikeln (P2) und den teilgeschützten Isocyanaten (A2) bevorzugt so gewählt, daß die resultierende Mischung enthaltend die Partikel (P) frei von ungeschützten Isocyanatgruppen ist.

Die teilgeschützten Isocyanate (A2) der allgemeinen Formel (XII) werden wie bereits beschrieben durch die Umsetzung eines Di- oder Polyisocyanates der allgemeinen Formel (VIII) mit Schutzgruppen HX hergestellt.

Auch hier kann die aus der Umsetzung der teilgeschützten Isocyanate (A2) mit den aminofunkionellen Partikeln (P2) erhaltene Mischung - sowohl in lösemittelhaltiger als auch lösemittelfreier Form - ohne weitere Aufarbeitung als Härterkomponente oder auch als Teil der Härterkomponente in einem Lack eingesetzt werden.

Ein weiterer Gegenstand der Erfindung sind Beschichtungsformulierungen (B), die die blockierte Isocyanatgruppen aufweisenden Partikel (P) enthalten. Dabei handelt es sich bevorzugt um kratzfeste Beschichtungen.

Dabei können die Partikel (P) zur Herstellung einer Härterkomponenten für Polyurethanlackierungen mit beliebigen weiteren geschützten Isocyanathärtern, ungeschützten Isocyanathärtern oder Melaminhärtern vermischt werden, wobei jedoch geschützte Isocyanathärter bevorzugt werden. Gegebenenfalls können die Partikel (P) aber auch als alleinige Härterkomponente fungieren. Bevorzugt werden die Partikel (P) als Härter bzw. als Teil der Härterkomponente in 1K-PU-Lacken eingesetzt. Wie beschrieben fallen die Partikel (P) bei ihrer Herstellung gegebenenfalls direkt als Mischung mit weiteren geschützten Isocyanaten an. Auch diese Mischungen können sowohl als alleinige Härterkomponenten oder auch nur als Teil einer Härterkomponenten in Lacken eingesetzt werden.

Zur Herstellung eines Polyurethanlackes wird die Härterkomponente mit beliebigen gegenüber Isocyanatgruppen reaktiven, mindestens difunktionellen Substanzen kombiniert. Dabei handelt es sich bevorzugt um hydroxylgruppen-haltige Prepolymere, besonders bevorzugt um hydroxylgruppen-haltige Polyacrylate oder Polyester. Das Verhältnis von blockierten Isocyanatgruppen zu isocyanatreaktiven Gruppen wird üblicherweise von 0,5 bis 1,5, bevorzugt von 0,8 bis 1,2 gewählt.

Vorzugsweise enthalten die Beschichtungsformulierungen (B) zu 0-90 Gew.-%, bezogen auf den Feststoffanteil, einen Lackhärter, der über geschützte oder ungeschützte NCO-Funktionen verfügt, vorzugsweise zu 20-90 Gew.-%, bezogen auf den Feststoffanteil, ein hydroxylgruppen-funktionelles Lackharz und vorzugsweise zu 3-40 Gew.-%, bezogen auf den Feststoffanteil, Partikel (P).

Des weiteren können die Beschichtungsformulierungen (B) auch noch die gängigen Lösungsmittel sowie die in.Lackformulierungen üblichen Additive und Zusätze enthalten. Zu nennen wären hier u.a. Verlaufshilfsmittel, oberflächenaktive Substanzen, Haftvermittler, Lichtschutzmittel wie UV-Absorber und/oder Radikalfänger, Thixotropiermittel sowie weitere Feststoffe. Zur Erzeugung der jeweils gewünschten Eigenschaftsprofile sowohl der Beschichtungsformulierungen (B) als auch der ausgehärteten Beschichtungen sind derartige Zusätze in der Regel unverzichtbar. Ebenso können die Beschichtungsformulierungen (B) auch Pigmente enthalten.

Die erhaltenen Beschichtungsformulierungen (B) können zur Beschichtung von beliebigen Substraten zur Verbesserung der Kratzfestigkeit, Abriebbeständigkeit oder Chemikalienbeständigkeit verwendet werden. Bevorzugte Substrate sind Kunststoffe wie Polycarbonat, Polybutylenterephthalat, Polymethylmethacrylat, Polystyrol oder Polyvinylchlorid sowie andere, in einem vorgelagerten Schritt aufgebrachte, Beschichtungen. Ebenso können die Beschichtungsmittel auch als kratzfeste Klar- oder Decklacke, z.B. in der Fahrzeugindustrie, verwendet werden. Das Aufbringen des Beschichtungsmittels kann durch beliebige Verfahren wie Eintauch-, Sprüh-, und Gießverfahren erfolgen. Auch ein Aufbringen nach einem "wet in wet"-Verfahren ist möglich. Die Aushärtung erfolgt durch Erwärmen unter den für blockierte Isocyanate erforderlichen Bedingungen und kann selbstverständlich durch den Zusatz von Katalysatoren beschleunigt werden.

Alle Symbole der vorstehenden Formeln weisen ihre Bedeutungen jeweils unabhängig voneinander auf. In allen Formeln ist das Siliciumatom vierwertig.

Soweit nicht anders angegeben sind alle Mengen- und Prozentangaben auf das Gewicht bezogen, alle Drücke 0,10 MPa (abs.) und alle Temperaturen 20 °C.

### Beispiele:

### Beispiel 1: Herstellung von teilgeschützten Isocyanaten

Es werden 50 g Desmodur^{®} VP LS 2294 (HDI-Trimerisat der Fa. Bayer mit einem Isocyanatgehalt von 5,46 mmol NCO/g) vorgelegt und mit 70 ml Butylacetat versetzt. Unter sehr guter Rührung werden bei einer Temperatur von -12 °C innerhalb von 10 min 17,85 g Butanoxim zugegeben. Die Temperatur steigt dabei bis maximal 0 °C an. Nach beendeter Zugabe wird die Kühlung entfernt. Durch die exotherme Reaktion erwärmt sich die Reaktionsmischung innerhalb der nächsten 20 min auf 30-40 °C. Es wird für 2 Stunden nachgerührt. ¹H-NMR-spektroskopisch läßt sich nachweisen, daß das Butanoxim vollständig abreagiert hat. D.h. entsprechend der eingesetzten stöchiometrischen Mengen sind 75 % der im HDI-Trimerisat enthaltenen Isocyanatfunktionen mit Butanoxim geschützt worden. Die übrigen Isocyanateinheiten bleiben ungeschützt.

### Beispiel 2: Herstellung von aminofunktionellen MQ-Harzen :

Zu einer Lösung von 25.00 g eines MQ-Harzes (Harz der Zusammensetzung (Me₃SiO_{1/2})_{0,4}(SiO_{4/2})_{0,6}(O_{1/2}C₂H₅)_{0,2}, einem mittleren Molekulargewicht Mw von 1400 g/mol und einem OH-Gruppengehalt von 3.4 Gew.-%) in 25 ml trockenem Toluol wird eine Lösung von 5,76 g der Verbindung XIV in 5 ml trockenem Toluol getropft und bei Raumtemperatur für 6 Stunden gerührt. ¹H- und ²⁹Si-NMR-Spektroskopie zeigt, dass sämtliche OH-Gruppen des MQ-Harzes mit Aminopropyldimethylsilyl-Gruppen funktionalisiert sind und daß Verbindung XIV nicht mehr nachweisbar, d.h. vollständig abreagiert, ist.

### Beispiel 3: Herstellung von MQ-Harzen mit geschützten Isocyanatgruppen und einer Beschichtungsformulierung enthaltend diese MQ-Harze

2,25 g der aminofunktionellen MQ-Harz-Lösung aus Beispiel 2 werden mit 2,25 g trockenem Toluol versetzt. Man erhält eine klare Lösung. Diese wird unter gutem Rühren mit 3,45 g der in Beispiel 1 erzeugten Lösung teilgeschützter Isocyanate in Butylacetat versetzt. Dabei kommt es zu einer leichten Erwärmung der Mischung. Anschließend werden 5 g eines Lackpolyols (EGT 25-34/4 der Fa. Bayer, Polyol mit einem OH-Gruppengehalt von 1,0 mmol OH/g) eingearbeitet. Man rührt für mehrere Minuten, bis sich eine homogene und klare Lösung gebildet hat.

### Beispiel 4: Herstellung von MQ-Harzen mit geschützten Isocyanatgruppen und einer Beschichtungsformulierung enthaltend diese MQ-Harze

3,0 g des aminofunktionellen MQ-Harzes aus Beispiel 2 werden mit 3,0 g Toluol versetzt. Man erhält eine klare Lösung. Diese wird unter gutem Rühren mit 3,75 g der in Beispiel 1 erzeugten Lösung teilgeschützter Isocyanat versetzt. Dabei kommt es zu einer leichten Erwärmung der Mischung. Anschließend werden 5 g eines Lackpolyols (EGT 25-34/4 der Fa. Bayer, Polyol mit einem OH-Gruppengehalt von 1,0 mmol OH/g) eingearbeitet. Man rührt für mehrere Minuten, bis sich eine homogene und klare Lösung gebildet hat.

### Vergleichsbeispiele 1 und 2:

Es wird so vorgegangen wie in Beispiel 3, nur daß auf den Einsatz der aminofunktionellen MQ-Harze aus Beispiel 2 verzichtet wird. Bei Vergleichsbeispiel 1 bleiben dabei die eingesetzten Mengen der übrigen Lackkomponenten gegenüber Beispiel 3 unverändert.

Bei Vergleichsbeispiel 2 werden hingegen nur 2,6 g der Lösung teilgeschützer Isocyanate in Butylacetat aus Beispiel 1 auf 5,0 g des Lackpolyols (EGT 25-34/4 der Fa. Bayer) zugegeben.

### Beispiel 5: Herstellung und Bewertung von Lackfilmen

Die Beschichtungsmassen aus den Beispielen 3 und 4 sowie den Vergleichsbeispielen 1 und 2 werden jeweils mittels eines Filmziehgerätes Coatmaster^{®} 509 MC der Fa. Erichsen mit einem Rakel der Spalthöhe 120 µm auf einer Glasplatten aufgerakelt. Anschließend werden die erhaltenen Beschichtungsfilme in einem Umlufttrockenschrank 60 Minuten bei 140 °C getrocknet. Sowohl aus den Lackformulierungen der Beispiele 3 und 4 als auch der Vergleichsbeispiele 1 und 2 werden optisch schöne und glatte Beschichtungen erhalten. Der Glanz aller 4 Beschichtungen - bestimmt mit einem Glanzmeßgerät Micro gloss 20° der Fa. Byk - lag bei allen vier Lacken bei ca. 155 Glanz-Einheiten.

Die Kratzfestigkeit der so erzeugten ausgehärteten Lackfilme wird mit einem Scheuerprüfgerät nach Peter-Dahn ermittelt. Hierzu wird ein Scheuervlies Scotch Brite^{®} 2297 mit einer Fläche von 45 x 45 mm mit einem Gewicht von 500 g beschwert und mit 40 Hüben verkratzt. Sowohl vor Beginn als auch nach Beendigung der Kratzversuche wird der Glanz der jeweiligen Beschichtung mit einem Glanzmeßgerät Micro gloss 20° der Fa. Byk gemessen. Als Maß für die Kratzfestigkeit der jeweiligen Beschichtung wurde der Glanzverlust bestimmt:

**Tabelle 1: Glanzverlust beim Kratztest nach Peter-Dahn:**

| Lackprobe | Glanzverlust |
|---|---|
| Beispiel 3 | 52,1 % |
| Beispiel 4 | 59,5 % |
| Vergleichsbeispiel 1 | 68,3 % |
| Vergleichsbeispiel 2 | 69,9 % |

### Beispiel 6: Herstellung von geschützten Isocyanaten

Es werden 50 g Desmodur^{®} VP LS 3300 (HDI-Trimerisat der Fa. Bayer mit einem Isocyanatgehalt von 5,18 mmol NCO/g) vorgelegt und mit 80 ml Butylacetat versetzt. Unter sehr guter Rührung werden bei einer Temperatur von -12 °C innerhalb von 10 min 17,85 g Butanoxim zugegeben. Die Temperatur steigt dabei bis maximal 0 °C an. Nach beendeter Zugabe wird die Kühlung entfernt. Durch die exotherme Reaktion erwärmt sich die Reaktionsmischung innerhalb der nächsten 20 min auf 30-40 °C. Es wird für 2 Stunden nachgerührt. Es wird eine Lösung mit einem Feststoffgehalt von 55,3 Gew.-% und mit einem Gehalt von 1,97 mmol geschützten NCO-Gruppen/g erhalten, in der sich IRspektroskopisch keine freien NCO-Bande mehr nachweisen lassen.

### Beispiel 7: Herstellung von Alkoxysilanen mit geschützten Isocyanatgruppen.

Es werden 86,10 g 2-Butanonoxim und 0,12 g Borchi^{®} Katalysator (Katalysator VP 0244 der Firma Borchers GmbH) vorgelegt und auf 80 °C erwärmt. Innerhalb von 1 h werden 150,00 g Isocyanatomethyl-trimethoxysilan zugetropft und das Gemisch für 1 h bei 80 °C gerührt. ¹H-NMR und IR-Spektroskopie zeigen, dass das Isocyanatosilan vollständig umgesetzt wurde.

### Beispiel 8: Herstellung von SiO₂-Nanopartikeln mit geschützten Isocyanatgruppen und einer Beschichtungsformulierung enthaltend diese Partikel.

Zu 2,20 g des in Beispiel 7 hergestellten geschützten Isocyanatosilans werden innerhalb von 30 min 33,30 g eines SiO₂-Organosols (IPA-ST der Firma Nissan Chemicals, 30 Gew.-% SiO₂, 12 nm) getropft. Zu der hochviskosen Mischung werden 0,33 g Wasser gegeben und der pH-Wert der Dispersion mittels Trifluoressigsäure auf 3 eingestellt. Anschliessend wird das Gemisch für 24 h bei Raumtemperatur gerührt. Nach Zugabe von 22,00 g Methoxypropanol wird das enthaltene Isopropanol bis zu einem SiO₂-Gehalt von 37% abdestilliert. Der Gehalt an geschützten NCO-Gruppen in der Mischung beträgt 0,34 mmol/g. 26,0 g der Dispersion werden mit 20,0 g der nach Beispiel 6 hergestellte Lösung enthaltend geschützte Isocyanate in Butylacetat gemischt und 24 h bei Raumtemperatur gerührt. Der Gehalt geschützter Isocyanatgruppen in der Dispersion beträgt 1,05 mmol geschütztes NCO/g..

Zur Herstellung einer Beschichtung werden 4,82 g der oben beschriebenen Dispersion enthaltend SiO₂-Nanoteilchen mit geschützten Isocyanatfunktionen mit 2,93 g Desmophen^{®} A 365 BA/X der Fa. Bayer (acrylatbasierendes Lackpolyol mit einem Hydroxylgruppengehalt von-1,71 mmol OH/g) vermischt. Dies entspricht einem molaren Verhältnis von geschützten Isocyanatfunktionen zu Hydroxylgruppen von 1,1 : 1. Die resultierende Beschichtungsmasse zeigt einen leichten Tyndall-Effekt. Ansonsten ist sie klar.

### Vergleichsbeispiel 3:

Es wird so vorgegangen wie in Beispiel 8, wobei allerdings anstelle der Dispersion enthaltend SiO₂-Nanoteilchen mit geschützten Isocyanatfunktionen das reine geschützte Isocyanat nach Beispiel 6 verwendet wird. Die Menge dieses wird entsprechend angepaßt, so daß ein molares Verhältnis von geschützten Isocyanatfunktionen zu Hydroxylgruppen von 1,1 : 1 resultiert. D.h. es werden 2,80 g des geschützten Isocyanates aus Beispiel 6 auf 2,93 g Polyol (Desmophen^{®} A 365 BA/X der Fa. Bayer) eingesetzt.

### Beispiel 9: Herstellung und Bewertung von Lackfilmen

Die Beschichtungsmassen aus Beispiel 8 und Vergleichsbeispiel 3 werden jeweils mittels eines Filmziehgerätes Coatmaster^{®} 509 MC der Fa. Erichsen mit einem Rakel der Spalthöhe 120 µm auf einer Glasplatte aufgerakelt. Anschließend werden die erhaltenen Beschichtungsfilme in einem Umlufttrockenschrank 60 Minuten bei 140°C getrocknet. Sowohl aus den Lackformulierungen der Beispiele 8 aus auch dem Vergleichsbeispiel 3 werden optisch einwandfreie, glatte Beschichtungen erhalten. Der Glanz aller 3 Beschichtungen - bestimmt mit einem Glanzmeßgerät Micro gloss 20° der Fa. Byk - liegt bei allen drei Lacken bei ca. 145 Glanz-Einheiten.

Die Kratzfestigkeit der so erzeugten ausgehärteten Lackfilme wird mit einem Scheuerprüfgerät nach Peter-Dahn ermittelt. Hierzu wird ein Scheuervlies Scotch Brite^{®} 2297 mit einer Fläche von 45 x 45 mm mit einem Gewicht von 500 g beschwert und mit 40 Hüben verkratzt. Sowohl vor Beginn als auch nach Beendigung der Kratzversuche wird der Glanz der jeweiligen Beschichtung mit einem Glanzmeßgerät Micro gloss 20° der Fa. Byk gemessen. Als Maß für die Kratzfestigkeit der jeweiligen Beschichtung wurde der Glanzverlust bestimmt:

**Tabelle 2: Glanzverlust beim Kratztest nach Peter-Dahn:**

| Lackprobe | Glanzverlust |
|---|---|
| Beispiel 8 | 48 % |
| Vergleichsbeispiel 3 | 70 % |

### Beispiel 10: Herstellung von mit blockierten Isocyanatgruppen modifizierter pyrogener Kieselsäure

Bei einer Temperatur von 25 °C unter Inertgas N₂ werden zu 100 g pyrogene hydrophile Kieselsäure, mit einer Feuchte kleiner 1% und einem HCl Gehalt kleiner 100 ppm und mit einer spezifischen Oberfläche von 300 m²/g (gemessen nach der BET Methode nach DIN 66131 und 66132) (erhältlich unter dem Namen WACKER HDK T30 bei Wacker-Chemie GmbH, München, D), 66 g des in Beispiel 7 beschriebenen geschützten Isocyanatosilans und 10 ml Wasser in feinstverteilter Form über eine Einstoffdüse (Druck 5 bar) zugedüst. Die so beladene Kieselsäure wird anschließend unter N₂ 2 h bei einer Temperatur von 25 °C fluidisiert und anschließend 2 h bei 100 °C in einem 100 l Trockenschrank unter N₂ zur Reaktion gebracht. Erhalten wird ein weißes Kieselsäure-Pulver mit homogener Silyliermittelschicht. Die Analysedaten sind in Tabelle 3 aufgeführt.

**Tabelle 3 Analysedaten der Kieselsäure aus Beispiel 10:**

| Beispiel | %C | BET [m²/g] | pH |
|---|---|---|---|
| 10 | 13,1 | 180 | 5,1 |

### Beschreibung der Analysenmethoden

1. Kohlenstoffgehalt (%C)
   Elementaranalyse auf Kohlenstoff; Verbrennen der Probe bei über 1000°C im O₂-Strom, Detektion und Quantifizierung des entstehenden CO₂ mit IR; Gerät LECO 244
2. BET
   gemessen nach der BET Methode nach DIN 66131 und 66132
3. pH
   4%ig (Gew%) Suspension der Kieselsäure in gesättigter wässrige Kochsalzlösung : Methanol = 50 : 50

### Beispiel 11: Herstellung einer Beschichtungsformulierung enthaltend eine durch blockierte Isocyanatgruppen modifizierte pyrogene Kieselsäure

Zur Herstellung einer Beschichtung werden 8,56 g Desmophen^{®} A 365 BA/X der Fa. Bayer (acrylatbasierendes Lackpolyol mit einem Hydroxylgruppengehalt von 1,71 mmol OH/g) mit 6,33 g Desmodur^{®} BL 3175 SN der Fa. Bayer (Methylethylketonoxim-blockiertes Polyisocyanat, blockierter NCO-Gehalt ca. 11 %) vermischt. Dies entspricht einem molaren Verhältnis von geschützten Isocyanatfunktionen zu Hydroxylgruppen von 1,1 : 1. Des weiteren werden 0,05 g einer 50 %igen Dibutylzinndilauratlösung (in Methylethylketon) und 0,01 g ADDID^{®} 100 der Fa. Wacker-Chemie GmbH (Verlaufshilfsmittel auf Basis Polydimethylsiloxan) sowie 3,15 g Methylethylketon zugemischt, wodurch eine Beschichtungsformulierung mit ca 50 % Festgehalt erhalten wird. In die so erhaltene Mischung werden mittels eines Dissolvers 1,8 g der aus Beispiel 10 erhaltenen, mit blockierten Isocyanatgruppen modifizierten pyrogenen Kieselsäure eingearbeitet, wobei eine klare Beschichtungsformulierung erhalten wird.

### Vergleichsbeispiel 4

Es wird vorgegangen wie in Beispiel 11 beschrieben, allerdings wird auf die Einarbeitung der modifizierten pyrogenen Kieselsäure verzichtet.

### Beispiel 12: Herstellung und Bewertung von Lackfilmen

Die Beschichtungsmassen aus Beispiel 11 und Vergleichsbeispiel 4 werden jeweils mittels eines Filmziehgerätes Coatmaster^{®} 509 MC der Fa. Erichsen mit einem Rakel der Spalthöhe 100 *µ*m auf einer Glasplatte aufgerakelt. Anschließend werden die erhaltenen Beschichtungsfilme in einem Umlufttrockenschrank 30 Minuten bei 160°C getrocknet. Sowohl aus den Lackformulierungen der Beispiele 11 als auch dem Vergleichsbeispiel 4 werden optisch einwandfreie, glatte Beschichtungen erhalten. Der Glanz der Beschichtungen - bestimmt mit einem Glanzmeßgerät Micro gloss 20° der Fa. Byk - liegt im Fall der Formulierung aus Beispiel bei etwa 145 Glanzeinheiten, im Fall des Vergleichsbeispiel 4 bei ca. 170 Glanz-Einheiten.

Die Kratzfestigkeit der so erzeugten ausgehärteten Lackfilme wird mit einem Scheuerprüfgerät nach Peter-Dahn ermittelt. Hierzu wird ein Scheuervlies Scotch Brite^{®} 2297 mit einer Fläche von 45 x 45 mm mit einem Gewicht von 500 g beschwert und mit 50 Hüben verkratzt. Sowohl vor Beginn als auch nach Beendigung der Kratzversuche wird der Glanz der jeweiligen Beschichtung mit einem Glanzmeßgerät Micro gloss 20° der Fa. Byk gemessen. Als Maß für die Kratzfestigkeit der jeweiligen Beschichtung wurde der Glanzverlust bestimmt:

**Tabelle 4: Glanzverlust beim Kratztest nach Peter-Dahn:**

| Lackprobe | Glanzverlust |
|---|---|
| Beispiel 11 | 33 % |
| Vergleichsbeispiel 4 | 65 % |

## Patentansprüche

1. Partikel (P), welche über einen Kern, der aus Atomen, die ausgewählt werden aus Metall-, Silicium- und Sauerstoffatomen, oder aus Siliconharzen besteht, und über mindestens eine geschützte Isocyanatgruppe an ihrer Oberfläche verfügen,
wobei die Partikel (P) erhältlich sind durch eine Umsetzung von Partikeln (P1), die aus Atomen, die ausgewählt werden aus Metall-, Silicium- und Sauerstoffatomen, oder aus Siliconharzen bestehen und über freie Hydroxidfunktionen verfügen, mit
a) Organosilanen (A), die mindestens eine geschützte Isocyanatfunktion enthalten, oder
b) mit Organosilanen (A1), die über mindestens eine NH-, OH- oder SH-Funktion verfügen, wobei als Zwischenprodukt NH-, OH- oder SH-funktionelle Partikel (P2) erhalten werden, die in einem weiteren Reaktionsschritt mit einer Verbindung (A2), die sowohl über mindestens eine geschützte Isocyanatfunktion als auch über eine ungeschützte Isocyanatfunktion verfügt, zu den Partikeln (P) umgesetzt werden,
wobei die Organosilane (A) und (A1) vor ihrer Umsetzung mit den Partikeln (P1) entweder über ein Sauerstoff-, Schwefel- oder Stickstoffatom in α-Position zur Silyleinheit verfügen oder eine Si-O oder Si-N-Einheit besitzen, die Teil eines cyclischen Strukturelementes sind.

2. Partikel (P) nach Anspruch 1, bei denen die Organosilane (A) oder (A1) eine reaktive Silylfunktion der allgemeinen Formel (I)
(R¹O)₃₋ₙ(R²)ₙSi-CH₂-A- (I),
besitzen, wobei
**R¹** Wasserstoff, Alkyl-, Cycloalkyl- oder Arylrest mit jeweils 1 bis 6 C-Atomen, wobei die Kohlenstoffkette durch nicht benachbarte Sauerstoff-, Schwefel- oder N**R³**-Gruppen unterbrochen sein kann,
**R²** Alkyl-, Cycloalkyl-, Aryl- oder Arylalkylrest mit jeweils 1 bis 12 C-Atomen, wobei die Kohlenstoffkette durch nicht benachbarte Sauerstoff-, Schwefel- oder N**R³**-Gruppen unterbrochen sein kann,
**R³** Wasserstoff, Alkyl-, Cycloalkyl, Aryl-, Arylalkyl, Aminoalkyl- oder Aspartatesterrest,
**A** Sauerstoff, Schwefel, eine Gruppe der Formel N**R³** oder ein Stickstoffatom, das Teil eines heterocyclischen Ringes ist, bedeuten, und
**n** die Werte 0, 1 oder 2 annehmen kann.

3. Partikel (P) nach Anspruch 1, bei denen Organosilane (A1) eingesetzt werden, die über eine reaktive Silylfunktion der allgemeinen Formeln (II) oder (IIa) 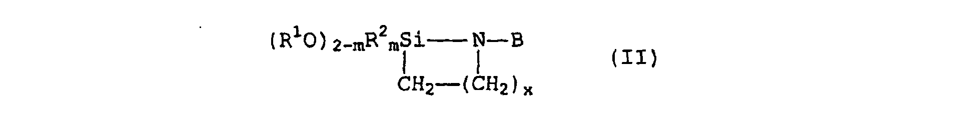 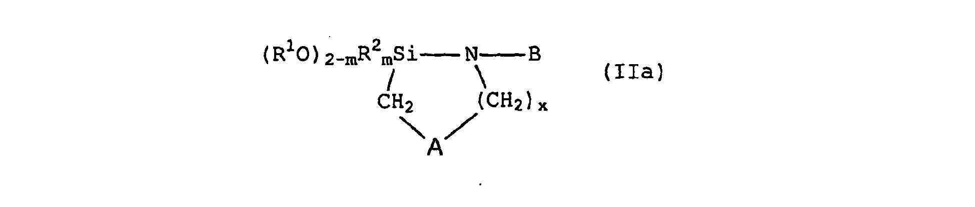 verfügen, wobei
**B** Wasserstoff oder einen beliebigen kohlenstoffhaltigen Rest darstellt,
**m** die Werte 0, 1 oder 2 und
**x** die Werte zwischen 0 und 10 annehmen können und **A, R¹, R²** die bei der allgemeinen Formel (I) gemäss Anspruch 2 angegebenen Bedeutungen aufweisen.

4. Partikel (P) nach Anspruch 1, bei denen als Organosilane (A₁) Verbindungen der allgemeinen Formeln (III) oder (IIIa) 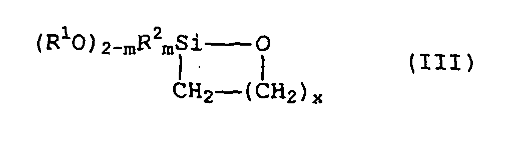 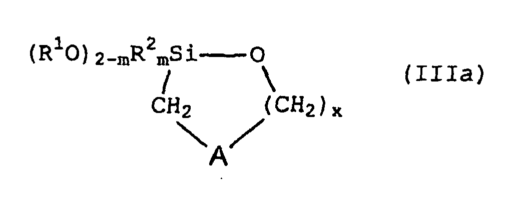 eingesetzt werden, wobei **m, x, A, R¹, R²** die bei den allgemeinen Formeln (I) und (II) gemäss Anspruch 2 und 3 angegebenen Bedeutungen aufweisen.

5. Partikel (P) nach Anspruch 1 oder 2, welche hergestellt werden durch Umsetzung der Partikel (P1) mit Organosilanen. (A) der allgemeinen Formel (VI)
(R¹⁰)₃₋ₙ(R²)ₙSi-CH₂-NH-C(O)-X (VI),
wobei
**R¹** und **R²** die bei den allgemeinen Formeln (I) und (II) gemäss Anspruch 2 und 3 angegebenen Bedeutungen aufweisen und
**X** eine Schutzgruppe darstellt, die bei Temperaturen zwischen 80 und 300 °C in Form von HX abgespalten wird, und dabei eine Isocyanatfunktion freisetzt.

6. Partikel (P) nach Anspruch 1 oder 2, welche hergestellt werden durch Umsetzung der Partikel (P1) mit Organosilanen (A) der allgemeinen Formel (VII)
(R¹O)₃₋ₙ(R²)ₙSi-CH₂-NR³-C(O)-NH-Y-(NH-C(O)-X)_{z} (VII),
wobei
**R¹, R², R³, n** und **X** die bei den allgemeinen Formeln (I) und (VI) gemäss Anspruch 2 und 5 angegebenen Bedeutungen aufweisen,
**Y** einen (z+1)-funktionellen aliphatischen oder aromatischen Rest darstellt und
**z** eine Zahl von 1-4, bevorzugt 1 oder 2, bedeutet.

7. Partikel (P) nach Anspruch 1 bis 4, welche erhältlich sind durch Umsetzung der Partikel (P1) mit Organosilanen (A1) der allgemeinen Formeln (II), (IIa), (III), (IIIa) oder (IX)
(R¹O)₃₋ₙ(R²)ₙSi-CH₂-NHR³ (IX),
wobei die dabei als Zwischenprodukt erhaltenen aminoalkyl- oder hydroxyalkyl-funktionellen Partikel (P2) in einem 2. Reaktionsschritt mit einem teilgeschützten Isocyanat (A2) der allgemeinen Formel (XII)
OCN-Y-(NH-C(O)-X)_{z} (XII),
zu den Partikeln (P) umgesetzt werden, wobei die Variablen **R¹, R², R³, Y, X, n** und **z** die bei der allgemeinen Formel (VII) gemäss Anspruch 6 angegebenen Bedeutungen besitzen.

8. Partikel (P) nach Anspruch 7, welche hergestellt werden durch Umsetzung der Partikel (P1) mit Organosilanen (A1) der Formel (XIV), 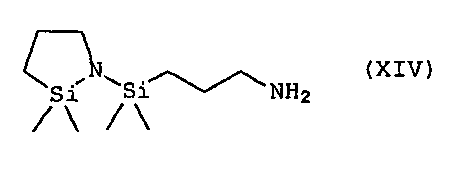 wobei die dabei als Zwischenprodukt erhaltenen aminoalkylfunktionellen Partikel (P2) in einem 2. Reaktionsschritt mit einem teilgeschützten Isocyanat (A2) der allgemeinen Formel (XII) zum Endprodukt (P) umgesetzt werden.

9. Partikel (P) nach Anspruch 1 bis 8, bei denen als Partikel (P1) kolloidale Silicium- oder Metalloxide eingesetzt werden.

10. Partikel (P) nach Anspruch 1 bis 8, bei denen als Partikel (P1) pyrogene Kieselsäure eingesetzt wird.

11. Partikel (P) nach Anspruch 1 bis 8, bei denen als Partikel (P1) Siliconharze der allgemeinen Formel (V)
(R⁵₃SiO_{1/2})ₑ(R⁵₂SiO_{2/2})_{f}(R⁵SiO_{3/2})_{g}(SiO_{4/2})ₕ (V)
eingesetzt werden, wobei
**R⁵** eine O**R¹**-Funktion, eine OH-Funktion, einen gegebenenfalls halogen-, hydroxyl-, amino-, epoxy-, thiol-, (meth)acryl-, oder auch NCO-substituierten Kohlenwasserstoffrest mit 1-18 Kohlenstoffatomen,
**e** einen Wert von größer oder gleich 0,
**f** einen Wert von größer oder gleich 0,
**g** einen Wert von größer oder gleich 0,
**h** einen Wert von größer oder gleich 0 bedeuten und die Summe aus **e + f + g + h** einen Wert von mindestens 1 bedeutet.

12. Verfahren zur Herstellung von Partikeln (P), welche über einen Kern, der aus Atomen, die ausgewählt werden aus Metall-, Silicium- und Sauerstoffatomen, oder aus Siliconharzen besteht, und über mindestens eine geschützte Isocyanatgruppe an ihrer Oberfläche verfügen,
wobei die Partikel (P) erhältlich sind durch eine Umsetzung von Partikeln (P1), die aus Atomen, die ausgewählt werden aus Metall-, Silicium- und Sauerstoffatomen, oder aus Siliconharzen bestehen und über freie Hydroxidfunktionen verfügen, mit
a) Organosilanen (A), die mindestens eine geschützte Isocyanatfunktion enthalten, oder
b) mit Organosilanen (A1), die über mindestens eine NH-, OH- oder SH-Punktion verfügen, wobei als Zwischenprodukt NH-, OH- oder SH-funktionelle Partikel (P2) erhalten werden, die in einem weiteren Reaktionsschritt mit einer Verbindung (A2), die sowohl über mindestens eine geschützte Isocyanatfunktion als auch über eine ungeschützte Isocyanatfunktion verfügt, zu den Partikeln (P) umgesetzt werden,
wobei die Organosilane (A) und (A1) vor ihrer Umsetzung mit den Partikeln (P1) entweder über ein Sauerstoff-, Schwefel- oder Stickstoffatom in α-Position zur Silyleinheit verfügen oder eine Si-O oder Si-N-Einheit besitzen, die Teil eines cyclischen Strukturelementes sind.

13. Beschichtungsformulierungen (B), die Partikel (P) gemäss Anspruch 1 bis 11 oder hergestellt gemäss Anspruch 12, enthalten.

14. Beschichtungsformulierung nach Anspruch 13, **dadurch gekennzeichnet, daß** diese zu 0-90 Gew.-%, bezogen auf den Feststoffanteil, einen Lackhärter, der über geschützte oder ungeschützte NCO-Funktionen verfügt, zu 20-90 Gew.-%, bezogen auf den Feststoffanteil, ein hydroxylgruppen-funktionelles Lackharz und zu 3-40 Gew.-%, bezogen auf den Feststoffanteil, Partikel (P) enthält.

## Claims

1. Particles (P) possessing a core composed of atoms selected from metal atoms, silicon atoms, and oxygen atoms, or of silicone resins, and possessing at least one protected isocyanate group on their surface, the particles (P) being obtainable by reaction of particles (P1) which are composed of atoms selected from metal atoms, silicon atoms, and oxygen atoms, or of silicone resins and possessing free hydroxide functions, with
a) organosilanes (A) which contain at least one protected isocyanate function, or
b) with organosilanes (A1) which possess at least one NH, OH or SH function, to give, as an intermediate, NH-, OH- or SH-functional particles (P2), which in a further reaction step are reacted with a compound (A2) which possesses not only at least one protected isocyanate function but also an unprotected isocyanate function, to give the particles (P),
the organosilanes (A) and (A1), prior to their reaction with the particles (P1), either possessing an oxygen atom, sulfur atom or nitrogen atom in α position to the silyl unit or possessing an Si-O or Si-N unit, which are part of a cyclic structural element.

2. Particles (P) of Claim 1, wherein the organosilanes (A) or (A1) possess a reactive silyl function of the general formula (I)
(R¹O)₃₋ₙ(R²)ₙSi -CH₂-A- (I)
where
**R¹** is hydrogen, alkyl, cycloalkyl or aryl radical having in each case 1 to 6 C atoms, it being possible for the carbon chain to be interrupted by nonadjacent oxygen, sulfur or N**R³** groups,
**R²** is alkyl, cycloalkyl, aryl or arylalkyl radical having in each case 1 to 12 C atoms, it being possible for the carbon chain to be interrupted by nonadjacent oxygen, sulfur or N**R³** groups,
**R³** is hydrogen, alkyl, cycloalkyl, aryl, arylalkyl, aminoalkyl or aspartate ester radical,
**A** is oxygen, sulfur, a group of the formula N**R³** or a nitrogen atom which is part of a heterocyclic ring, and
**n** may take on the values 0, 1 or 2.

3. Particles (P) of Claim 1, wherein organosilanes (A1) are used which possess a reactive silyl function of the general formulae (II) or (IIa) 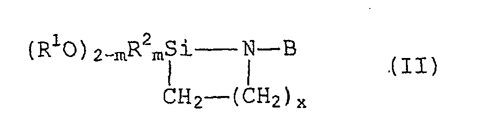 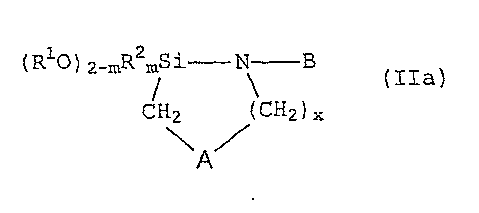 where
**B** is hydrogen or any carbon-containing radical,
**m** may take on the values 0, 1 or 2, and
**x** may take on the values between 0 and 10,
and **A, R¹, R²** have the definitions specified in the context of the general formula (I) according to claim 2.

4. Particles (P) of Claim 1, wherein organosilanes (A1) used are compounds of the general formulae (III) or (IIIa) 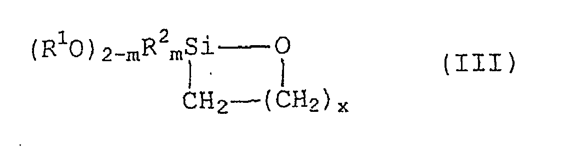 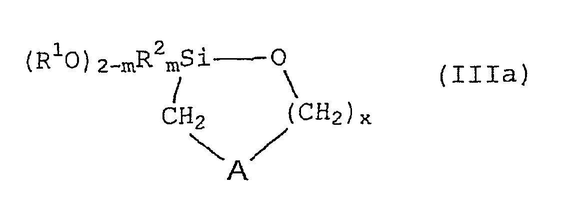 where **m, x, A, R¹, R²** have the definitions specified in the context of the general formulae (I) and (II) according to claim 2 and 3.

5. Particles (P) of Claim 1 or 2, prepared by reacting the particles (P1) with organosilanes (A) of the general formula (VI)
(R¹O)₃₋ₙ(R²)ₙSi-CH₂-NH-C(O)-X (VI)
where
**R¹** and **R²** have the definitions specified in the context of the general formulae (I) and (II) according to claim 2 and 3, and
**X** is a protective group which is eliminated at temperatures between 80 and 300°C in the form of H**X**, and in being eliminated liberates an isocyanate function.

6. Particles (P) of Claim 1 or 2, prepared by reacting the particles (P1) with organosilanes (A) of the general formula (VII)
(R¹O)₃₋ₙ (R²)ₙSi-CH₂-NR³-C(O) -NH-Y- (NH-C(O) -X)_{z} (VII)
where
**R¹, R², R³, n,** and **X** have the definitions specified in the context of the general formulae (I) and (VI) according to claim 2 and 5,
**Y** is a (z+1)-functional aliphatic or aromatic radical, and
**z** is a number from 1-4, preferably 1 or 2.

7. Particles (P) of Claim 1 to 4, obtainable by reacting the particles (P1) with organosilanes (A1) of the general formulae (II), (IIa), (III), (IIIa) or (IX)
(R¹O)₃₋ₙ(R²)ₙSi-CH₂-NHR³ (IX),
the aminoalkyl- or hydroxyalkyl-functional particles (P2) obtained as an intermediate in that reaction being reacted in a 2^{nd} reaction step with a part-protected isocyanate (A2) of the general formula (XII)
OCN-Y-(NH-C(O)-X)_{z} (XII)
to give the particles (P),
the variables **R¹, R², R³, Y, X, n,** and **z** possessing the definitions specified in the context of the general formula (VII) according to claim 6.

8. Particles (P) of Claim 7, prepared by reacting the particles (P1) with organosilanes (A1) of the formula (XIV), 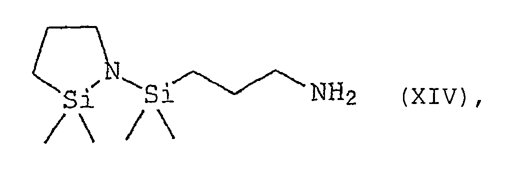 the aminoalkyl-functional particles (P2) obtained as an intermediate in that reaction being reacted in a 2^{nd} reaction step with a part-protected isocyanate (A2) of the general formula (XII) to give the end product (P).

9. Particles (P) of Claim 1 to 8, wherein colloidal silicon oxides or metal oxides are used as particles (P1).

10. Particles (P) of Claim 1 to 8, wherein fumed silica is used as particles (P1).

11. Particles (P) of Claim 1 to 8, wherein silicone resins of the general formula (V)
(R⁵₃SiO_{1/2})ₑ(R⁵₂SiO_{2/2})_{f}(R⁵SiO_{3/2})_{g}(SiO_{4/2})ₕ (V)
where
**R⁵** is an O**R¹** function, an OH function, an optionally halogen-, hydroxyl-, amino-, epoxy-, thiol-, (meth)acryloyl-, or else NCO-substituted hydrocarbon radical having 1-18 carbon atoms,
**e** is a value greater than or equal to 0,
**f** is a value greater than or equal to 0,
**g** is a value greater than or equal to 0,
**h** is a value greater than or equal to 0, and the sum of **e + f + g + h** is a value which is at least 1,
are used as particles (P1).

12. Process for preparing particles (P) which possess a core composed of atoms selected from metal atoms, silicon atoms, and oxygen atoms, or of silicone resins, and possessing at least one protected isocyanate group on their surface, the particles (P) being obtainable by reaction of particles (P1) which are composed of atoms selected from metal atoms, silicon atoms, and oxygen atoms, or of silicone resins and possessing free hydroxide functions, with
a) organosilanes (A) which contain at least one protected isocyanate function, or
b) with organosilanes (A1) which possess at least one NH, OH or SH function, to give, as an intermediate, NH-, OH- or SH-functional particles (P2), which in a further reaction step are reacted with a compound (A2) which possesses not only at least one protected isocyanate function but also an unprotected isocyanate function, to give the particles (P),
the organosilanes (A) and (A1), prior to their reaction with the particles (P1), either possessing an oxygen atom, sulfur atom or nitrogen atom in α position to the silyl unit or possessing an Si-O or Si-N unit, which are part of a cyclic structural element.

13. Coating formulation (B) comprising particles (P) according to Claim 1 to 11 or prepared according to claim 12.

14. Coating formulation of Claim 13, **characterized in that** it contains 0-90% by weight, based on the solids fraction, of a coating-material curative possessing protected or unprotected NCO functions, 20-90% by weight, based on the solids fraction, of a hydroxyl-functional film-forming resin, and 3-40% by weight, based on the solids fraction, of particles (P).

## Revendications

1. Particules (P), qui disposent d'un noyau constitué d'atomes choisis parmi les atomes métalliques, de silicium et d'oxygène, ou de résines de silicone, et d'au moins un groupement isocyanate protégé en leur surface,
les particules (P) pouvant être obtenues par transformation de particules (P1), qui sont constituées d'atomes choisis parmi les atomes métalliques, de silicium et d'oxygène, ou de résines de silicone et qui disposent de fonctions hydroxyde libres, avec
a) des organosilanes (A), qui contiennent au moins une fonction isocyanate protégée, ou
b) avec des organosilanes (A1), qui disposent d'au moins une fonction NH, OH ou SH, en obtenant comme produit intermédiaire des particules à fonction NH, OH ou SH (P2), qui sont transformées dans une étape de réaction ultérieure avec un composé (A2) qui dispose d'au moins une fonction isocyanate protégée ainsi que d'une fonction isocyanate non protégée, en particules (P),
les organosilanes (A) et (A1) disposant, avant leur transformation avec les particules (P1), soit d'un atome d'oxygène, de soufre ou d'azote en position α par rapport à l'unité silyle, soit d'une unité Si-O ou Si-N, qui sont une partie d'un élément structurel cyclique.

2. Particules (P) selon la revendication 1, dans lesquelles les organosilanes (A) ou (A1) présentent une fonction silyle réactive de formule générale I
(R¹O) ₃₋ₙ (R²) ₙSi-CH₂-A- (I),
où
R¹ signifie hydrogène, un radical alkyle, cycloalkyle ou aryle avec à chaque fois 1 à 6 atomes de carbone, la chaîne carbonée pouvant être interrompue par des groupements oxygène, soufre ou NR³ non adjacents,
R² signifie un radical alkyle, cycloalkyle, aryle ou arylalkyle avec à chaque fois 1 à 12 atomes de carbone, la chaîne carbonée pouvant être interrompue par des groupements oxygène, soufre ou NR³ non adjacents,
R³ signifie hydrogène, un radical alkyle, cycloalkyle, aryle, arylalkyle, aminoalkyle ou ester d'aspartate,
A signifie oxygène, soufre, un groupement de formule NR³ ou un atome d'azote qui fait partie d'un hétérocycle, et
n peut valoir 0, 1 ou 2.

3. Particules (P) selon la revendication 1, dans lesquelles sont utilisés des organosilanes (A1) qui disposent d'une fonction silyle réactive des formules générales (II) ou (IIa) 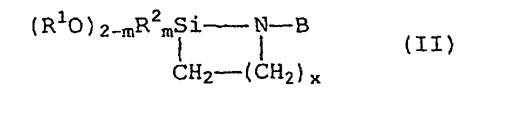 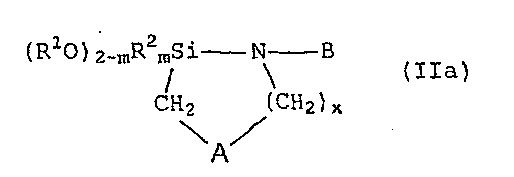 où
B représente hydrogène ou un radical carboné quelconque,
m peut valoir 0, 1 ou 2 et
x peut valoir entre 0 et 10
et A, R¹, R² présentent les significations indiquées pour la formule générale (I) selon la revendication 2.

4. Particules (P) selon la revendication 1, dans lesquelles sont utilisés, comme organosilanes (A1), des composés des formules générales (III) ou (IIIa) 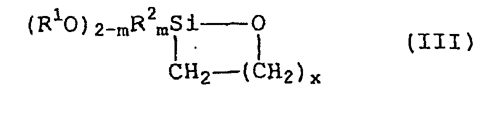 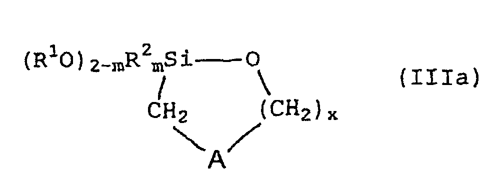 où m, x, A, R¹, R² présentent les significations indiquées pour les formules générales (I) et (II) selon les revendications 2 et 3.

5. Particules (P) selon la revendication 1 ou 2, qui sont préparées par transformation des particules (P1) avec des organosilanes (A) de formule générale (VI)
(R¹O)₃₋ₙ(R²)ₙSi-CH₂-NH-C(O)-X (VI),
où
R¹ et R² présentent les significations indiquées pour les formules générales (I) et (II) selon les revendications 2 et 3 et
X représente un groupe de protection qui est dissocié à des températures entre 80 et 300°C sous forme de HX et libère ainsi une fonction isocyanate.

6. Particules (P) selon la revendication 1 ou 2, qui sont préparées par transformation des particules (P1) avec des organosilanes (A) de formule générale (VII)
(R¹O)₃₋ₙ(R²)ₙSi-CH₂-NR³-C(O)-NH-Y-(NH-C(O)-X)_{z} (VII),
où
R¹, R², R³, n et X présentent les significations indiquées pour les formules générales (I) et (VI) selon les revendications 2 et 5,
Y représente un radical aliphatique ou aromatique à fonctionnalité (z+1) et
z signifie un nombre de 1-4, de préférence 1 ou 2.

7. Particules (P) selon les revendications 1 à 4, qui peuvent être obtenues par transformation des particules (P1) avec des organosilanes (A1) des formules générales (II), (IIa), (III), (IIIa) ou (IX)
(R¹O)₃₋ₙ(R²)ₙSi-CH₂-NHR³ (IX),
où les particules à fonctionnalité aminoalkyle ou hydroxyalkyle (P2) obtenues comme produit intermédiaire sont transformées, dans une 2ème étape de réaction, avec un isocyanate partiellement protégé (A2) de formule générale (XII)
OCN-Y-(NH-C(O)-X)₂ (XII),
en particules (P), où
les variables R¹, R², R³, Y, X, n et z présentent les significations indiquées pour la formule générale (VII) selon la revendication 6.

8. Particules (P) selon la revendication 7, qui sont préparées par transformation des particules (P1) avec des organosilanes (A1) de formule générale (XIV) 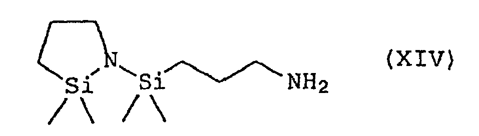 où les particules à fonctionnalité aminoalkyle (P2) obtenues comme produit intermédiaire sont transformées, dans une 2ème étape de réaction, avec un isocyanate partiellement protégé (A2) de formule générale (XII) en produit final (P).

9. Particules (P) selon les revendications 1 à 8, dans lesquelles on utilise, comme particules (P1) des oxydes de silicium ou métalliques colloïdaux.

10. Particules (P) selon les revendications 1 à 8, dans lesquelles on utilise, comme particules (P1) des silices pyrogènes.

11. Particules (P) selon les revendications 1 à 8, dans lesquelles on utilise, comme particules (P1) des résines de silicone de formule générale (V)
(R⁵₃SiO_{1/2})ₑ(R⁵₂SiO_{2/2})_{f}(R⁵SiO_{3/2})_{g}(SiO_{4/2})ₕ (V)
où
R⁵ signifie une fonction OR¹, une fonction OH, un radical hydrocarboné le cas échéant substitué par halogène, hydroxyle, amino, époxy, thiol, (méth)acryle, ou également NCO comprenant 1-18 atomes de carbone,
e présente une valeur supérieure ou égale à 0,
f présente une valeur supérieure ou égale à 0,
g présente une valeur supérieure ou égale à 0,
h présente une valeur supérieure ou égale à 0 et la somme de e + f + g + h vaut au moins 1.

12. Procédé pour la préparation de particules (P) qui disposent d'un noyau constitué d'atomes choisis parmi les atomes métalliques, de silicium et d'oxygène, ou de résines de silicone, et d'au moins un groupement isocyanate protégé en leur surface,
les particules (P) pouvant être obtenues par transformation de particules (P1) qui sont constituées d'atomes choisis parmi les atomes métalliques, de silicium et d'oxygène, ou de résines de silicone et qui disposent de fonctions hydroxyde libres, avec
a) des organosilanes (A) qui contiennent au moins une fonction isocyanate protégée, ou
b) avec des organosilanes (A1) qui disposent d'au moins une fonction NH, OH ou SH, en obtenant comme produit intermédiaire des particules à fonction NH, OH ou SH (P2) qui sont transformées dans une étape de réaction ultérieure avec un composé (A2) qui dispose d'au moins une fonction isocyanate protégée ainsi que d'une fonction isocyanate non protégée, en particules (P),
les organosilanes (A) et (A1) disposant, avant leur transformation avec les particules (P1), soit d'un atome d'oxygène, de soufre ou d'azote en position α par rapport à l'unité silyle, soit d'une unité Si-O ou Si-N, qui sont une partie d'un élément structurel cyclique.

13. Formulations de revêtement (B), qui contiennent des particules (P) selon les revendications 1 à 11 ou préparées selon la revendication 12.

14. Formulation de revêtement selon la revendication 13, **caractérisée en ce qu'**elle contient 0-90% en poids, par rapport à la proportion de solides, d'un durcisseur de laque, qui dispose de fonctions NCO protégées ou non protégées, 20-90% en poids, par rapport à la proportion de solides, d'une résine de laque présentant une fonctionnalité de groupements hydroxyle et 3-40% en poids, par rapport à la proportion de solides, de particules (P).
